# EUROPÄISCHE PATENTSCHRIFT

(11) **EP 1 179 408 B1**
(45) Veröffentlichungstag und Bekanntmachung des Hinweises auf die Patenterteilung: **04.07.2007**
(21) Anmeldenummer: 01110533.5
(22) Anmeldetag: 28.04.2001
(51) Int. Cl.: B29C 45/66, B29C 33/20, B29C 33/22

(54) **Antriebsvorrichtung für die bewegliche Formaufspannplatte einer Spritzgiessmaschine**
Driving mechanism for the movable platen of an injection moulding machine
Dispositif d'entraînenent pour le plateau mobil d'une presse à injecter

(30) Priorität: 08.08.2000 DE 10039514; 17.08.2000 DE 10040312; 24.08.2000 DE 10041668
(43) Veröffentlichungstag der Anmeldung: 13.02.2002
(73) Patentinhaber: Bosch Rexroth AG, 97816 Lohr am Main (DE)
(72) Erfinder: Dantlgraber, Jörg, 97816 Lohr am Main (DE)

(56) Entgegenhaltungen:
- EP-A- 0 768 165
- DE-A- 4 411 649
- DE-A- 19 916 399
- FR-A- 2 239 329
- US-A- 3 830 614
- US-A- 5 362 222

## Beschreibung

Die Erfindung betrifft eine Antriebsvorrichtung, die insbesondere für das Verfahren der beweglichen Formaufspannplatte einer Spritzgießmaschine verwendet wird und die die Merkmale aus dem Oberbegriff des Patentanspruchs 1 aufweist.

Eine solche Antriebsvorrichtung hat zwei wichtige unterschiedliche Forderungen zu erfüllen. Zum einen soll sie die Formaufspannplatte zum Schließen und zum Öffnen der Form möglichst schnell verfahren, damit die Zykluszeit für die Herstellung eines Formstücks klein gehalten werden kann. Zum andern soll sie die Formaufspannplatte und damit die ganze Form gegen den hohen Spritzdruck mit großer Kraft zuhalten können. Zum einen sind also Stellbewegungen mit hoher Geschwindigkeit auszuführen, zum andern sind ohne wesentliche Bewegung hohe Kräfte auszuüben. Derartige Anforderungen können sich außer bei der Schließeinheit auch bei den Auswerfern oder der Einspritzeinheit einer Kunststoffspritzgießmaschine stellen. Zum Beispiel wird beim Einspritzen von Kunststoff in die Form die Plastifizierschnecke mit relativ hoher Geschwindigkeit in Richtung auf die Form zu bewegt, bis die Form vollständig mit Kunststoff gefüllt ist. Wird im Anschluß daran die sich in der Form befindliche Kunststoffschmelze einem sogenannten Nachdruck ausgesetzt, so muß der Antrieb eine hohe Kraft ohne wesentliche Bewegung der Plastifizierschnecke aufbringen.

Es sind Spritzgießmaschinen mit rein hydraulischen Antriebsvorrichtungen bekannt. Dabei können durch eine entsprechend große Wirkfläche an einem Hydraulikkolben sehr große Zuhaltekräfte erzeugt werden. Allerdings wird dann während der Schließbewegung viel Druckflüssigkeit benötigt, um den an den großen Hydraulikkolben angrenzenden und sich während der Schließbewegung vergrößernden Druckraum mit Druckflüssigkeit zu füllen. Man kann für das Füllen eine oder mehrere Hydropumpen mit großem Hubvolumen verwenden. Man kann jedoch auch für die Schließbewegung, für die keine allzu hohe Kraft notwendig ist, separate kleinere Hydraulikzylinder verwenden, wie dies zum Beispiel bei einer aus der US-A 4 030 299 bekannten Spritzgießmaschine gezeigt ist. Wird die bewegbare Formaufspannplatte von den kleinen Hydraulikzylindern im Sinne eines Schließens der Form verfahren, so wird der große Hydraulikkolben mitgenommen, wobei sich das Volumen des großen Druckraums vergrößert und Druckmittel aus einem Behälter über ein Nachsaugventil in den Druckraum einströmt. Wenn die bewegliche Formaufspannplatte ihre vordere Endstellung erreicht hat, schließt das Nachsaugventil. Dem großen Druckraum wird von einer zweiten Hydraulikpumpe über ein Wegeventil weiter Druckmittel zugeführt, wodurch der Druck in dem Druckraum ansteigt. Wenn ein bestimmter Druck erreicht ist, wird das Wegeventil umgeschaltet und in dem großen Druckraum ein hoher Druck aufgebaut, wofür nur wenig Druckflüssigkeit benötigt wird. Somit kann mit hydraulischen Antriebsvorrichtungen auf relativ einfache Weise die hohe Zuhaltekraft erzeugt werden. Für die schnelle Stellbewegung dagegen ist dann der Aufwand recht hoch.

Es sind auch Spritzgießmaschinen mit rein elektromechanischen Antriebsvorrichtungen bekannt. Beispielhaft sei hier zunächst auf die Spritzgießmaschinen nach der US-A 4 929 165 oder der US-A 5 362 222 hingewiesen. Mit elektromechanischen Antriebsvorrichtungen läßt sich, weil Elektromotoren mit hoher Drehzahl laufen können, auf relativ einfache Weise eine hohe Geschwindigkeit für die Stellbewegung einer Formaufspannplatte oder eines anderen beweglichen Glieds einer Spritzgießmaschine erreichen. Die Schwäche einer elektromechanischen Antriebsvorrichtung liegt in der Erzeugung einer hohen Kraft. Dabei ist zu berücksichtigen, daß die Drehbewegung eines Rotors des Elektromotor über einen Gewindetrieb in die geradlinige Bewegung des Ausgangselements umgewandelt wird, wobei der Gewindetrieb nur begrenzt belastbar ist, wenn er nicht vorzeitig verschleißen soll. Insofern ist die in der US-A 4 929 165 gezeigte elektromechanische Antriebsvorrichtung besonders nachteilig, weil dort der Gewindetrieb unmittelbar vor der beweglichen Formaufspannplatte angeordnet ist. Bei der elektromechanischen Antriebsvorrichtung nach der US-A 5 362 222 liegt in der Kraftkette zwischen dem Gewindetrieb und der beweglichen Formaufspannplatte eine Kniehebelanordnung mit zwei parallel zueinander wirkenden Kniehebeln. Bei der Spritzgießmaschine handelt es sich um eine solche mit einer ortsfesten Abstützplatte hinter der beweglichen Formaufspannplatte. Die elektromotorische Antriebseinheit ist von dieser Abstützplatte getragen. Außerdem stützen sich die beiden Kniehebel an der Abstützplatte ab. Insgesamt ist diese Anordnung nicht geeignet, um an sogenannten Zweiplattenmaschinen verwendet zu werden, die zur Einsparung von Bauraum nur eine ortsfeste und ein bewegliche Formaufspannplatte, jedoch nicht auch noch eine ortsfeste Abstützplatte besitzen.

Wie die DE 44 26 521 C1 zeigt, ist es bei Blasformmaschinen bekannt, die Formaufspannplatten über sich im wesentlichen senkrecht zur Verfahrrichtung erstreckende zweiarmige Hebel zu bewegen.

Aus der GB 484 244 ist eine Spritzgießmaschine mit einer elektromechanischen Antriebsvorrichtung bekannt, die im wesentlichen die Merkmale aus dem Oberbegriff des Patentanspruchs 1 aufweist. Bei der bekannten Antriebsvorrichtung ist der eine Hebelarm des Hebelgetriebes zum Schließen und Öffnen der Form über einen Lenker mit der beweglichen Formaufspannplatte verbunden. Dieser Lenker wird beim Schließen und beim Zuhalten der Form auf Druck beansprucht und muß deshalb entsprechend stark ausgebildet werden.

Der Erfindung liegt die Aufgabe zugrunde, eine Antriebsvorrichtung, die die Merkmale aus dem Oberbegriff des Patentanspruchs 1 aufweist, so weiterzuentwickeln, daß mit geringem Aufwand und ohne die Beanspruchung von viel Bauraum in der Achse der Spritzgießmaschine einerseits eine schnelle Stellbewegung möglich ist und andererseits auch eine große Kraftwirkung erzielt werden kann.

Das gesetzte Ziel wird gemäß dem kennzeichnenden Teil des Patentanspruchs 1 dadurch erreicht, daß der Hebel und der Lenker so angeordnet sind, daß der Lenker beim Aufbringen der hohen Schließkraft auf Zug beansprucht wird. Bei Beanspruchung auf Zug kann ein Lenker bei gegebener Stärke viel größere Kraft als bei einer Beanspruchung auf Druck übertragen. Ist eine Kraft vorgegeben, so kann ein Lenker bei Beanspruchung auf Zug wesentlich schwächer als bei einer Beanspruchung auf Druck ausgebildet werden, so daß der Aufwand für die Maschine gering, das Gewicht der Maschine klein und die Kosten niedrig sind.

Durch eine hohe Drehzahl des Elektromotors während der Stellbewegung kann trotz der Hebelübersetzung eine hohe Geschwindigkeit der Formaufspannplatte erreicht werden. Heute stehen Elektromotoren mit Drehzahlregelung allgemein zur Verfügung. Ein solcher Elektromotor wird vorzugsweise auch innerhalb einer erfindungsgemäßen Antriebsvorrichtung verwendet.

Vorteilhafte Ausgestaltungen einer erfindungsgemäßen elektromechanischen Antriebsvorrichtung kann man den Unteransprüchen entnehmen.

In der bevorzugten Ausgestaltung gemäß Patentanspruch 2 ist der zweiarmige Hebel ein gestreckter Hebel und deshalb zum Beispiel aus einem Metallstrang besonders leicht herstellbar. Der Hebel kann jedoch gemäß Patentanspruch 3 auch ein Winkelhebel sein, wobei sich der lange Hebelarm in einen Bereich legen läßt, der nicht für andere Funktionen, zum Beispiel für die Entnahme und Abfuhr der Formstücke, benötigt wird.

Damit auch der Elektromotor die Maschine nicht verlängert, ist eine Anordnung gemäß Patentanspruch 4 vorteilhaft.

Liegen Gründe vor, den Bereich der Spritzgießmaschine seitlich neben der beweglichen Formaufspannplatte frei von Teilen der Antriebsvorrichtung zu halten, weil dort zum Beispiel eine Vorrichtung zur Entnahme und zur Abfuhr der Formstücke untergebracht ist, so ist dies nicht nur durch eine Ausbildung des Hebels als Winkelhebel möglich. Der Hebel kann leicht außerhalb des genannten Bereichs angeordnet sein, wenn er gemäß Patentanspruch 6 über einen Lenker, der über ein Drehgelenk am kurzen Hebelarm angelenkt ist, mit der beweglichen Formaufspannplatte gekoppelt ist. Der Hebel kann dabei gemäß Patentanspruch 8 ohne weiteres eine gestellfeste Hebelachse haben.

Grundsätzlich ist es möglich, den zweiarmigen Hebel auch dann mit einer gestellfesten Hebelachse schwenkbar zu lagern, wenn er unmittelbar mit der beweglichen Formaufspannplatte gekoppelt ist. Durch eine entsprechende Gestaltung der Verbindung des kurzen Hebelarms mit der geradlinig beweglichen Formaufspannplatte könnte ein Ausgleich für den sich ändernden Abstand zwischen der Formaufspannplatte und der Hebelachse geschaffen werden. Dies erscheint nicht so günstig, weil diese Verbindung dann mit zusätzlichem Spiel behaftet wäre und/oder sich der Angriffspunkt des kurzen Hebelarms an der Formaufspannplatte verlagern würde. Vorteilhafter ist es, wenn gemäß Patentanspruch 5 das Hebelgetriebe über ein Drehgelenk mit einer bezüglich der Formaufspannplatte ortsfesten Drehachse mit der Formaufspannplatte gekoppelt ist. Dann wird die Kraft vom Hebelgetriebe immer an derselben Stelle in die Formaufspannplatte eingeleitet. Dabei kann sich zwischen dem zweiarmigen Hebel und der Formaufspannplatte, wie in Patentanspruch 6 angegeben, durchaus noch ein weiteres Glied des Hebelgetriebes befinden. Der kurze Hebelarm kann längenveränderlich sein.

Ähnlich einfach wie die Ausgestaltung gemäß Patentanspruch 6 erscheint der Aufbau der Antriebsvorrichtung, wenn gemäß Patentanspruch 7 der zweiarmige Hebel über ein Drehgelenk mit der Formaufspannplatte gekoppelt ist und eine Hebelachse besitzt, die während der Stellbewegung der Formaufspannplatte verlagerbar ist. Diese Verlagerung gelingt auf einfache Weise gemäß Patentanspruch 9 mithilfe eines verschwenkbaren Lenkers, mit dem der zweiarmige Hebel über ein Drehgelenk gekoppelt ist. Dieser Lenker kann den Hebel besonders gut abstützen, wenn er sich gemäß Patentanspruch 10 im wesentlichen in Richtung der Kraftresultierenden der an den beiden Hebelarmen des zweiarmigen Hebels angreifenden Kräfte ausgerichtet ist. Insbesondere befindet sich der Lenker gemäß Patentanspruch 11 auf derselben Seite des Hebels wie eine feste Formaufspannplatte, so daß er keinen zusätzlichen Bauraum in Längsrichtung der Maschine benötigt und außerdem beim Schließen und Zuhalten der Form auf Zug beansprucht wird.

Vorteilhafterweise ist gemäß Patentanspruch 13 auch das Ausgangselement des elektromotorischen Antriebs über ein Drehgelenk, dessen Drehachse parallel zu der Hebelachse verläuft, mit dem Hebel gekoppelt. Der Elektromotor ist um eine zur Hebelachse parallele und gestellfeste Drehachse verschwenkbar. Aufgrund der Verschwenkbarkeit des Elektromotors bezüglich des Gestells und des Ausgangselements bezüglich des Hebels kann eine Verlagerung der Angriffsstelle des Ausgangselements am Hebel während der Stellbewegung der Formaufspannplatte ohne irgendwelche Schubgelenke und ohne zusätzliche Zwischenglieder ausgeglichen werden.

Gemäß Patentanspruch 14 greift der elektromotorische Antrieb nicht unmittelbar am zweiarmigen Hebel an. Vielmehr ist zwischen das Ausgangselement und den zweiarmigen Hebel eine Kniehebelanordnung eingefügt. Dies bedeutet eine weitere Kraftübersetzungsstufe in dem Hebelgetriebe zwischen dem elektromotorischen Antrieb und der Formaufspannplatte. Um keinen zusätzlichen Platz zu benötigen, ist auch die Kniehebelanordnung vorteilhafterweise unterhalb der ortsfesten Formaufspannplatte der Spritzgießmaschine untergebracht. Mit der Kniehebelanordnung erhält man eine sich während der Schließbewegung der Formaufspannplatte verändernde Kraftübersetzung. Die Kraftübersetzung soll besonders groß sein, wenn die Form geschlossen ist und die hohe Zuhaltekraft aufgebracht werden soll. Dementsprechend wird die Kniehebelanordnung während der Schließbewegung der beweglichen Formaufspannplatte stärker gestreckt.

Die Kraftübersetzung kann für die Erzeugung der hohen Zuhaltekraft auch dadurch vergrößert werden, daß gemäß Patentanspruch 15 die Länge wenigstens eines Hebelarms des Hebels verändert wird. Besonders vorteilhaft ist es dabei, gemäß Patentanspruch 16 die Länge beider Hebelarme durch eine Verlagerung der Hebelachse zu verändern. Bevorzugt wird dies durch die in den Patentansprüchen 17 bis 27 enthaltenen konstruktiven Ausgestaltungen erreicht, wobei bei einer Ausbildung gemäß Patentanspruch 23 nur ein Elektromotor benötigt wird.

Eine hohe Zuhaltekraft, in die nicht nur die durch das Verhältnis der Länge der beiden Arme des zweiarmigen Hebels gegebene Kraftübersetzung, sondern eine stärkere Kraftübersetzung eingeht, erhält man auch durch eine Ausbildung gemäß Patentanspruch 28. Danach ist der Lenker, an dem der zweiarmige Hebel zwischen seinen beiden Armen gelagert ist, ein Element einer Kniehebelanordnung, die für die Erzeugung einer Zuhaltekraft in Richtung einer Neutrallage, worunter eine vollständig gestreckte oder eine vollständig gebeugte Lage der Kniehebelanordnung verstanden wird, verstellbar. Dabei wird zum Zuhalten der Form über den Lenker und das Drehgelenk zwischen ihm und dem zweiarmigen Hebel sowie dem zweiarmigen Hebel die Kraft für die Formaufspannplatte eingeleitet. Bei einer Ausbildung gemäß Patentanspruch 29 kann sich die Kniehebelanordnung, von der der Lenker ein Element ist, vor der beweglichen Formaufspannplatte im Bereich der ortsfesten Formaufspannplatte und der Einspritzeinheit befinden. Weitere vorteilhafte Ausgestaltungen einer Antriebsvorrichtung gemäß Patentanspruch 28 finden sich in den Patentansprüchen 30 bis 34. Die Maßnahmen gemäß den Patentansprüchen 28 bis 34 sind auch bei einer erfindungsgemäßen Antriebsvorrichtung in der Ausgestaltung nach Patentanspruch 6 vorteilhaft.

Bei den Ausgestaltungen gemäß den Patentansprüchen 35 und 36 ist zwischen dem zweiarmigen Hebel und der beweglichen Formaufspannplatte ein zweiter zweiarmiger Hebel angeordnet. Die beiden Hebel greifen mit Verzahnungen ineinander. Bei geschlossener Form nehmen sie eine relative Position zueinander ein, die einen Kniehebeleffekt ausnutzen läßt und so eine besonders hohe Zuhaltekraft ermöglicht.

Mehrere Ausführungsbeispiele einer erfindungsgemäßen Antriebsvorrichtung sind in den Zeichnungen dargestellt. Anhand dieser Zeichnungen wird die Erfindung nun näher erläutert.

### Es zeigen

- Figur 1: in einer Ansicht in Richtung der Drehachsen das erste Ausführungsbeispiel, bei dem ein zweiarmiger Hebel an der beweglichen Formaufspannplatte einer Spritzgießmaschine und am Ausgangselement eines elektromotorischen Antriebs angelenkt ist und der Hebel sowohl bei der Stellbewegung der beweglichen Formaufspannplatte als auch bei der Zuhaltung der Form bei gleich bleibenden Hebelarmlängen verschwenkt wird,
- Figur 2: eine Ansicht des ersten Ausführungsbeispiels senkrecht zu den Dreh-achsen in Richtung des Pfeiles A aus Figur 1,
- Figur 3: eine Ansicht in Richtung der Drehachsen auf das zweite Ausführungsbeispiel, bei dem zwischen dem Ausgangselement des elektromotorischen Antriebs und dem langen Hebelarm des zweiarmigen Hebels eine Kniehebelanordnung eingefügt ist und dadurch zum Zuhalten der Form eine höhere Kraftübersetzung des Hebelgetriebes erhalten wird als zu Beginn der Schließbewegung der beweglichen Formaufspannplatte,
- Figur 4: wiederum in Ansicht in Richtung der Drehachsen des Hebelgetriebes das dritte Ausführungsbeispiel, bei dem ein mit dem zweiarmigen Hebel über ein Drehgelenk gekoppelter Lenker Teil einer Kniehebelanordnung ist und diese Kniehebelanordnung über ein Zahnradgetriebe von einem zweiten Elektromotor verstellt wird, um die hohe Zuhaltekraft zu erzeugen,
- Figur 5: in Ansicht in Richtung der Drehachsen des Hebelgetriebes das vierte Ausführungsbeispiel, bei dem wie bei dem dritten Ausführungsbeispiel ein mit dem zweiarmigen Hebel über ein Drehgelenk gekoppelter Lenker Teil einer Kniehebelanordnung ist und diese Kniehebelanordnung über den auch den zweiarmigen Hebel verschwenkenden Elektromotor verstellt wird, um die hohe Zuhaltekraft zu erzeugen,
- Figur 6: in Ansicht in Richtung der Drehachsen des Hebelgetriebes das fünfte Ausführungsbeispiel, bei dem zum Zuhalten der Form eine erhöhte Kraftübersetzung dadurch erhalten wird, daß die Länge der Hebelarme verändert wird, wobei dazu ein zweiter Elektromotor verwendet wird,
- Figur 7: als sechstes Ausführungsbeispiel eine Variante des fünften Ausführungsbeispiels mit nur einem Elektromotor mit zwei Abtrieben und einer dem einen Antrieb nachgeordneten Rutschkupplung,
- Figur 8: als siebtes Ausführungsbeispiel eine weitere Variante des fünften Ausführungsbeispiels wiederum mit nur einem Elektromotor mit zwei Abtrieben und einer dem einen Antrieb nachgeordneten Schaltkupplung,
- Figur 9: als achtes Ausführungsbeispiel eine weitere Variante des fünften Ausführungsbeispiels bei dem zur Veränderung der Hebellänge ein Hydrozylinder vorhanden ist,
- Figur 10: in Ansicht in Richtung der Drehachsen das neunte Ausführungsbeispiel, bei dem mit dem mit dem Ausgangselement des elektromotorischen Antriebs unmittelbar verbundene zweiarmiger Hebel und der Formaufspannplatte ein weiterer zweiarmiger Hebel eingefügt ist, der mit dem ersten Hebel über eine Verzahnung gekoppelt ist,
- Figur 11: eine Ansicht des neunten Ausführungsbeispiels in Richtung des Pfeiles B aus Figur 10,
- Figur 12: in einer Ansicht in Richtung der Drehachsen ein zehntes Ausführungsbeispiel, das ähnlich einfach wie das erste Ausführungsbeispiel aufgebaut ist, bei dem jedoch der zweiarmige Hebel über einen Lenker mit der beweglichen Formaufspannplatte gekoppelt ist und eine gestellfeste Drehachse besitzt, und
- Figur 13: in einer Ansicht in Richtung der Drehachsen ein elftes Ausführungsbeispiel, das prinzipiell wie das erste Ausführungsbeispiel aufgebaut ist, bei dem jedoch der zweiarmige Hebel ein Winkelhebel ist.

Nach den Figuren besitzt eine Spritzgießmaschine, z.B. eine Kunststoffspritzgießmaschine, ein Gestell 10 mit mehreren Standbeinen 11 sowie mit Quertraversen 12, die im Abstand zu einem Fundament an den Standbeinen 11 befestigt sind. Die Quertraversen tragen eine gestellfeste Formaufspannplatte 13, die mit einem Spritzkanal 14 versehen ist, um aus einem Plastifizierzylinder 15 Kunststoffmaterial in eine sich aus zwei Formhälften 16 und 17, von denen eine von der gestellfesten Formaufspannplatte 13 getragen wird, zusammensetzende Form einspritzen zu können. Auf den Quertraversen 12 ist eine bewegliche Formaufspannplatte 18, die die andere Formhälfte trägt, geradlinig verfahrbar geführt. Diese Formaufspannplatte befindet sich in einer von der gestellfesten Formaufspannplatte 13 entfernten Endstellung, wenn die Form zur Entnahme eines Formstücks geöffnet ist. Zum Schließen der Form wird die Formaufspannplatte aus dieser Endstellung in einer schnellen Stellbewegung an die gestellfeste Formaufspannplatte herangefahren. Dabei ist im wesentlichen nur zur Beschleunigung der Formaufspannplatte 18 eine natürlich von der Größe der Maschine und damit der Masse von Formaufspannplatte und Formhälfte abhängige größere Kraft notwendig. Nach dem Schließen der Form muß die bewegliche Formaufspannplatte 18 mit einer großen Zuhaltekraft an der Formaufspannplatte 13 gehalten werden, damit die Formhälften nicht durch den Spritzdruck aufgeweitet werden und ungenaue Formstücke entstehen.

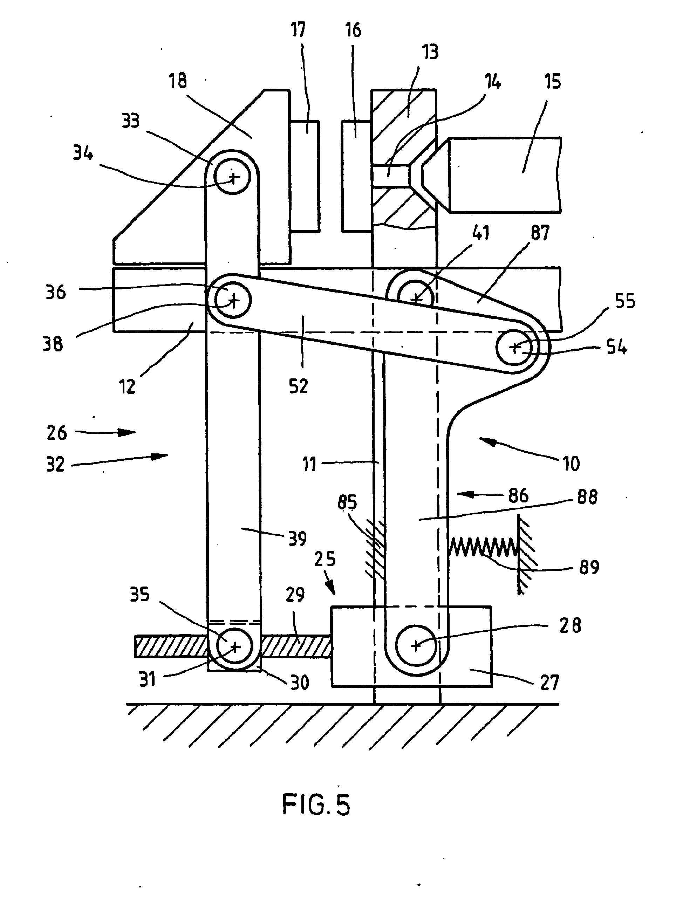

Bewegt und zugehalten wird die Formaufspannplatte 18 von einer Antriebsvorrichtung, die einen elektromotorischen Antrieb 25 und ein Hebelgetriebe 26 aufweist. Zu dem elektromotorischen Antrieb 25 gehört ein Elektromotor 27 mit einer nicht näher dargestellten rotierenden Abtriebswelle. Der Elektromotor befindet sich knapp über dem Fundament und etwa vertikal unterhalb der gestellfesten Formaufspannplatte 13. Mit seinem Gehäuse ist er um eine horizontale Achse 28 schwenkbar, die in einer senkrecht zur Bewegungsrichtung der Formaufspannplatte 18 verlaufenden Ebene liegt und die außer bei dem vierten Ausführungsbeispiel nach Figur 5 gestellfest ist. Außer beim vierten Ausführungsbeispiel ist der Elektromotor 27 an zwei gegenüberliegenden Standbeinen 11 in der Mitte zwischen diesen aufgehängt. Die Motorwelle ist durch eine daran verdrehsicher befestigte Gewindespindel 29 verlängert, die durch eine Bohrung einer körperlichen Lagerachse 30 hindurchgeht und in der Bohrung in ein Innengewinde der Lagerachse eingreift. Die geometrische Achse 31 der Lagerachse 30 verläuft parallel zur Schwenkachse 28 des Elektromotors 27.

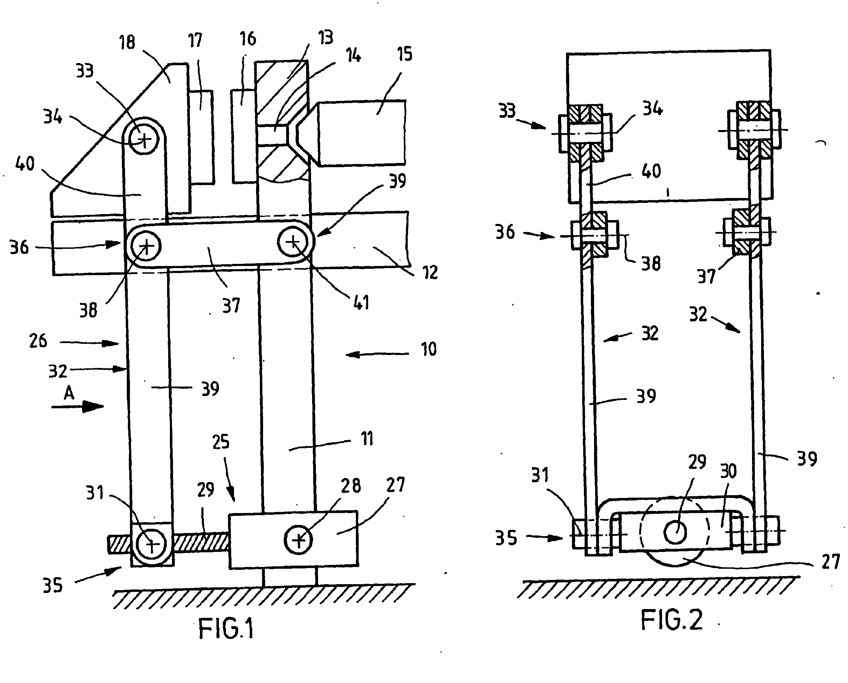

Nach den Figuren 1 und 2 weist das Hebelgetriebe 26 zwei parallel wirkende und identisch aufgebaute Hebelanordnungen an beiden Seiten der Formaufspannplatte 18 auf. Jede Hebelanordnung besitzt einen zweiarmigen Hebel 32, der an seinem einen Ende über ein Drehgelenk 33 mit einer zur Formaufspannplatte 18 ortsfesten und parallel zu den Achsen 28 und 31 verlaufenden Drehachse 34 mit der Formaufspannplatte 18 verbunden ist. Am anderen Ende greift ein Lagerzapfen der Lagerachse 30 in eine Bohrung eines Hebels 32 ein. Somit ist jeder Hebel 32 über ein Drehgelenk 35, dessen Achse die Achse 31 ist, mit der Lagerachse 30 gekoppelt. Diese ist das geradlinig in Richtung der Achse des Elektromotors 27 bewegbare Ausgangselement des elektromotorischen Antriebs 25. Im Abstand zu den Drehachsen 31 und 34 ist jeder Hebel 32 über ein weiteres Drehgelenk 36 mit einem Lenker 37 gekoppelt, der sich in der der geöffneten Form zugeordneten Endstellung der Formaufspannplatte 18, die in Figur 1 gezeigt ist, etwa horizontal von dem vertikal verlaufenden Hebel 32 weg in Richtung auf die gestellfeste Formaufspannplatte 13 zu und in dem in Figur 1 gezeigten Betriebszustand in Richtung der Kraftresultierenden der beiden an den Enden der Hebelarme 39 und 40 des Hebels 32 angreifenden Kräfte erstreckt und im Abstand zu der Drehachse 38 des Drehgelenks 36 über ein weiteres Drehgelenk 39 mit Drehachse 41 mit dem Gestell 10 der Maschine gekoppelt ist. Der Lenker 37 befindet sich im Bereich der Quertraverse 12. Der Abstand der die Hebelachse darstellenden Drehachse 38 von der Drehachse 31 des Drehgelenks am Ausgangselement der elektromotorischen Antriebseinheit 25 ist etwa dreimal so groß wie der Abstand der Drehachse 38 von der Drehachse 34 des Drehgelenks zwischen dem Hebel 32 und der Formaufspannplatte 18. Jeder Hebel 32 hat also einen langen Hebelarm 39 zwischen den beiden Achsen 38 und 31 und einen kurzen Hebelarm 40 zwischen den beiden Achsen 38 und 34.

Um von der in den Figuren 1 und 2 gezeigten Endstellung der Formaufspannplatte 18 aus die Form zu schließen, wird der Elektromotor 27 derart angesteuert, daß sich die Gewindespindel 29 in eine solche Richtung dreht, daß die Lagerachse 30 vom Gehäuse des Elektromotors 27 wegwandert. Dadurch werden die Hebel 32, nach Figur 1 betrachtet, im Uhrzeigersinn um die Drehachse 38 verschwenkt. Das freie Ende des kurzen Hebelarms 40 bewegt sich auf die gestellfeste Formaufspannplatte 13 zu und nimmt die bewegliche Formaufspannplatte 18 mit. Da die Position der Drehachse 34 bezüglich der Formaufspannplatte 18 fest ist, werden während des Verfahrens der Formaufspannplatte 18 der Lenker 37 um die Drehachse 41 und der elektromotorische Antrieb 25 um die Drehachse 28 leicht verschwenkt. Auch die Lagerachse 30 und die Hebel 32 verdrehen sich gegeneinander. Ist die Form geschlossen, so kann von dem elektromotorischen Antrieb 25 eine Zuhaltekraft erzeugt werden, die um das Verhältnis von langem Hebelarm zu kurzem Hebelarm größer ist als die Kraft, mit der der Elektromotor 27 die Gewindespindel 29 beaufschlagen kann, oder die Kraft, mit der man den Gewindetrieb 29, 30 belasten will.

Der Elektromotor 27 ist ein in seiner Drehzahl regelbarer Elektromotor, mit dem die Formaufspannplatte 18 nach einem gewünschten Geschwindigkeitsprofil verfahren werden kann.

Die Kunststoffspritzgießmaschine, von der in den Figuren 1 und 2 Teile gezeigt sind, ist eine sogenannte Zweiplatten-Spritzgießmaschine. Solche Spritzgießmaschinen zeichnen sich durch eine kurze Baulänge in Bewegungsrichtung der beweglichen Formaufspannplatte 18 aus. Insbesondere aus Figur 1 ersieht man, daß durch die Antriebsvorrichtung für die bewegliche Formaufspannplatte 18 die Baulänge nicht vergrößert wird. Gleiches gilt für alle gezeigten Ausführungen.

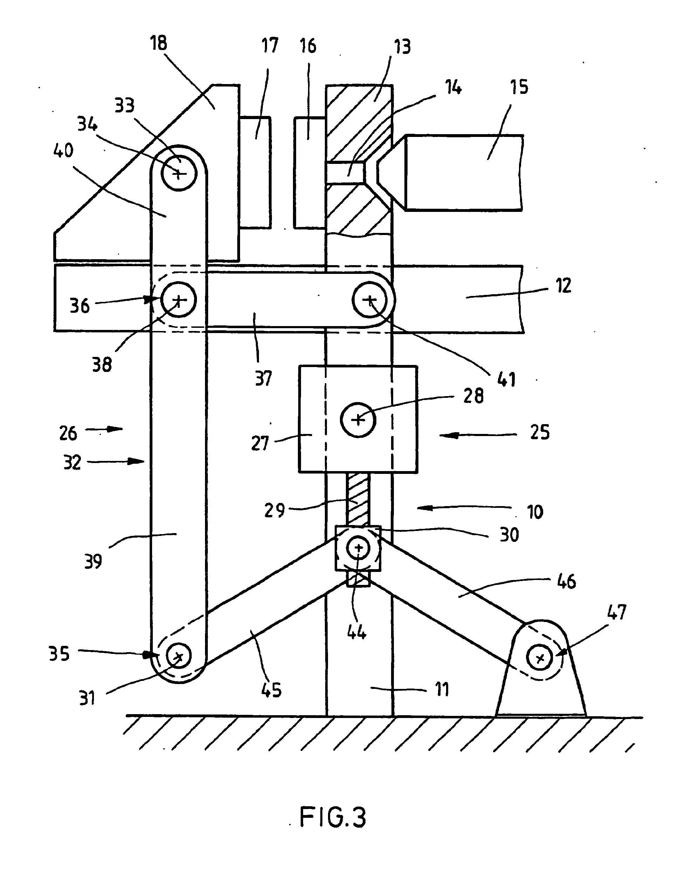

Bei dem Ausführungsbeispiel nach Figur 3 ist das Gestell 10 der Maschine identisch zu demjenigen des Ausführungsbeispiels nach den Figuren 1 und 2. Die gezeigten Teile des Gestells sind deshalb mit den gleichen Bezugszahlen versehen. Identität besteht auch hinsichtlich des Hebels 32 und des Lenkers 37. Die verschiedenen Abschnitte, Drehgelenke und Drehachsen dieser Teile sind deshalb mit den gleichen Bezugszahlen wie in den Figuren 1 und 2 versehen. Unterschiedlich zu dem Ausführungsbeispiel nach den Figuren 1 und 2 ist die Anordnung des elektromotorischen Antriebs 25 sowie die Art der Bewegungsübertragung von dessen Ausgangselement 30 auf den langen Hebelarm 39. Der elektromotorische Antrieb 25 ist nun in einem größeren Abstand vom Fundament wiederum um eine Achse 28 schwenkbar zwischen zwei Standbeinen 11 aufgehängt. Seine Längsachse verläuft nun jedoch in der Endstellung der Formaufspannplatte 18 nicht horizontal, sondern vertikal. Die Gewindespindel 29 verlängert die nicht näher gezeigte Motorwelle in Richtung auf das Fundament zu und greift in ein Gewinde einer Lagerachse 30 ein, die nun jedoch nicht zwei Hebel 32, sondern auf jeder Seite die Enden zweier Lenker 45 und 46 einer Kniehebelanordnung lagert. Das andere Ende eines Lenkers 45 ist über das Drehgelenk 35 mit einem Hebel 32 gekoppelt, während das andere Ende eines Lenkers 46 über ein gestellfestes Drehgelenk 47 mit dem Gestell 10 verbunden ist.

In der gezeigten Endstellung der Formaufspannplatte 18 verläuft der Hebel 32 wiederum vertikal und der Lenker 37 horizontal. Die beiden Lenker 45 und 46 der Kniehebelanordnung bilden einen stumpfen Winkel miteinander. Zum Schließen der Form wird die Gewindespindel 29 so gedreht, daß die Lagerachse 30 in Richtung auf das Fundament zu nach unten wandert. Dadurch wird das Drehgelenk 35 vom Drehgelenk 47 weggedrückt und der Hebel 32, nach Figur 3 betrachtet, im Uhrzeigersinn um die Drehachse 38 verschwenkt. Wenn die Form geschlossen ist, ist die Kniehebelanordnung 45, 46 fast gestreckt, so daß der elektromotorische Antrieb 25 eine große Zuhaltekraft erzeugen kann. Während der Schließbewegung ist der elektromotorische Antrieb 25 leicht verschwenkt worden, da sich die Lagerachse 30 auf einem Kreis um die Achse des Drehgelenks 47 bewegen muß.

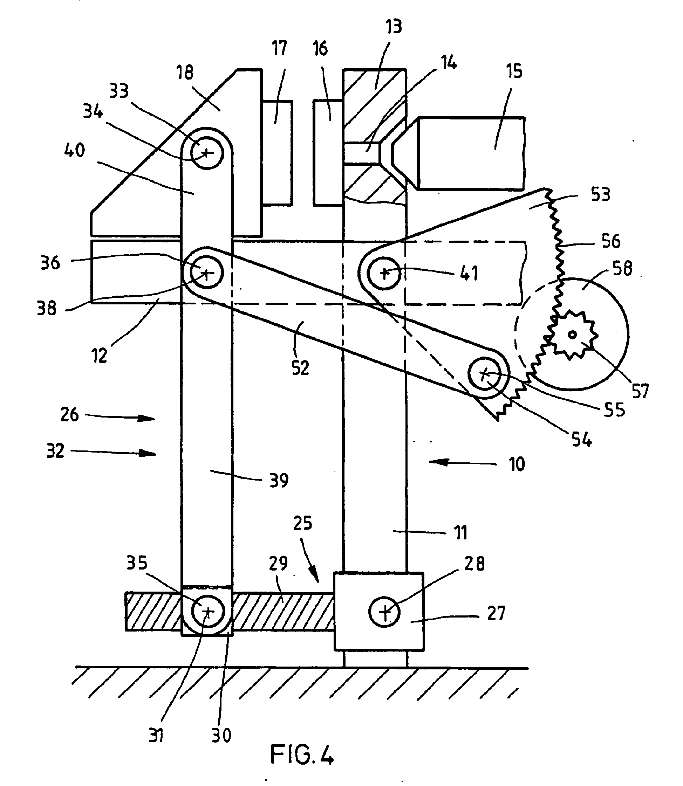

Das Ausführungsbeispiel nach Figur 4 entspricht im Hinblick auf die Anordnung des zweiarmigen Hebels 32 und des elektromotorischen Antriebs 25 dem ersten Ausführungsbeispiel. Allerdings ist die Funktion des elektromotorischen Antriebs 25 beim Zuhalten der Form etwas anders als bei der Ausführung nach Figur 1. Es muß dann nämlich über die selbsthemmend ausgebildeten Gewinde der Spindel 29 und der Lagerachse 30 nur eine Kraft abgestützt, aber nicht aufgebaut werden. Dem Aufbau der Zuhaltekraft dient eine Kniehebelanordnung, zu der ein gegenüber dem Lenker 37 aus den beiden ersten Ausführungsbeispielen modifizierter Lenker 52 und ein Zahnsegment 53 gehören. Am einen Ende ist der Lenker 52 genauso wie der Lenker 37 der ersten beiden Ausführungsbeispiele über ein Drehgelenk 36 mit der Drehachse 38 mit dem Hebel 32 gekoppelt. Das Zahnsegment 53 ist mit einer Drehachse 41, deren Lage gleich der Drehachse 41 aus den Figuren 1 bis 3 ist, drehbar am Gestell 10 gelagert. Der Lenker 52 erstreckt sich über die Drehachse 41 hinaus und ist über ein Drehgelenk 54 mit einer Drehachse 55 mit dem Zahnsegment 53 gekoppelt. Das Zahnsegment kämmt mit seiner Verzahnung 56 mit einem Ritzel 57, das auf der Welle eines weiteren Elektromotors 58 sitzt, dessen Drehachse parallel zu den Drehachsen 38, 55 und 41 verläuft. Die Verbindungslinien zwischen den Drehachsen 38 und 55 sowie zwischen den Drehachsen 41 und 55 in der Zeichenebene schließen einen spitzen Winkel zueinander ein. Wird nun das Zahnsegment 53, nach Figur 4 betrachtet, entgegen dem Uhrzeigersinn verdreht, so wird der Kniehebel 52, 53 weiter gebeugt, wobei die Drehachse 38 näher an die Drehachse 41 heranwandern muß.

Bei der Ausführung nach Figur 4 wird zum Schließen der Form zunächst der Elektromotor 27 betrieben. Die Kniehebelanordnung 52 und 53 bleibt im wesentlichen in der gezeigten Position. Es verändert sich lediglich etwas die Lage des Lenkers 52, da die Achse des Hebels 32 wegen der ortsfesten Lage der Drehachse 34 zur Formaufspannplatte 18 leicht nach oben wandern muß. Ist die Form geschlossen, wird der Elektromotor 27 stillgesetzt und der Elektromotor 58 angesteuert. Dieser dreht das Zahnsegment 53 entgegen dem Uhrzeigersinn, so daß der Lenker 52 den Hebel 32 näher an die Drehachse 41 heranzieht und eine hohe Zuhaltekraft erzeugt wird.

Das Ausführungsbeispiel nach Figur 5 besitzt wie das Ausführungsbeispiel nach Figur 4 einen Lenker 52, der Teil einer Kniehebelanordnung ist, die dem Aufbau der Zuhaltekraft dient. Allerdings wird nun der Elektromotor 27 nicht nur zum Verschwenken des Hebels 32, also zum Schließen der Form, sondern auch zum Verstellung der Kniehebelanordnung verwendet. Dazu ist das Zahnsegment 53 als zweiter Lenker der Kniehebelanordnung nach Figur 4 durch einen zweiarmigen Hebel 86 ersetzt, der um dieselbe Drehachse 41 wie das Zahnsegment 53 aus Figur 4 drehbar am Gestell 10 angelenkt ist und dessen beiden Arme einen spitzen Winkel miteinander einschließen. Ein erster Arm 87 des Hebels 86 erstreckt sich von der Drehachse 41 zu einer Drehachse 55 eines Drehgelenks 54, über das der Lenker 52 drehbar mit dem Hebel 86 verbunden ist. Der Arm 87 und der Lenker 52 schließen einen spitzen Winkel miteinander ein. Das Drehgelenk und die Drehachse zwischen dem Lenker 52 und dem Arm 87 sind mit denselben Bezugszahlen versehen wie das Drehgelenk und die Drehachse zwischen dem Lenker 52 und dem Zahnsegment 53 aus Figur 4, da die Funktion die gleiche ist, auch wenn bei dem Ausführungsbeispiel nach Figur 5 der Abstand zwischen den beiden Drehachsen 41 und 55 kürzer und der Winkel zwischen den Verbindungslinien von der Drehachse 55 zu den Drehachsen 38 und 41 kleiner als bei dem Ausführungsbeispiel nach Figur 4 ist.

Ein zweiter Arm 88 des Hebels 86 ist wesentlich länger als der Arm 87 und erstreckt sich bei geöffneter Form 16, 17 von der Drehachse 41 vertikal nach unten bis zu dem Elektromotor 27. Dieser ist nun um die Achse 28 schwenkbar nicht am Gestell 10, sondern an dem langen Arm 88 des Hebels 86 gelagert. Zwischen diesem Arm 88 und dem Gestell 10 ist eine Feder 89 eingespannt, die den Hebel 86 im Uhrzeigersinn beaufschlagt und bis zu einer bestimmten Grenzkraft an einem gestellfesten Anschlag 85 hält. Dieser Anschlag kann aus einem elastischen Material, zum Beispiel Gummi oder Polyurethan bestehen.

Bei dem Ausführungsbeispiel nach Figur 5 wird zum Schließen der Form der Elektromotor 27 in eine solche Drehrichtung betrieben, daß der Hebel 32, nach Figur 5 betrachtet, im Uhrzeigersinn um die Drehachse 38 verschwenkt und die Formaufspannplatte 18 an die Formaufspannplatte 13 herangefahren wird. Die dazu vom Elektromotor 27 über die Gewindespindel 29 auf den Hebel 32 auszuübende Kraft ist so gering, daß die Feder 89 den Hebel 86 gegen die Reaktionskraft an dem Anschlag 85 hält. Der Elektromotor 27 wird nur leicht um die Achse des Gelenks 28 verschwenkt. Die Kniehebelanordnung 52, 86 bleibt im wesentlichen in der gezeigten Position. Es verändert sich lediglich etwas die Lage des Lenkers 52, da die Achse des Hebels 32 wegen der ortsfesten Lage der Drehachse 34 zur Formaufspannplatte 18 leicht nach oben wandern muß.

Der Elektromotor 27 wird auch nach dem Schließen der Form weiterbetrieben. Da sich jedoch der Hebel 32 nicht mehr verschwenken läßt, steigt die vom Elektromotor 27 ausgeübte Kraft stark an. Die Feder 89 vermag den Hebel 86 nicht mehr am Anschlag 85 zu halten. Vielmehr wird der Hebel 86 von dem Elektromotor entgegen dem Uhrzeigersinn verschwenkt und dadurch die Kniehebelanordnung 52, 86 nahe an die inverse Strecklage gebracht, in der der Winkel zwischen den Verbindungslinien zwischen den Drehachsen 38, 41 und 55 null ist. Es wird eine hohe Zuhaltekraft auf die Formaufspannplatten 18 und 13 ausgeübt.

Zum Öffnen der Form wird der Elektromotor 27 in die entgegengesetzte Richtung betrieben, wobei zunächst der Hebel 86 an den Anschlag 85 zurückkehrt und dann der Hebel 32 verschwenkt wird.

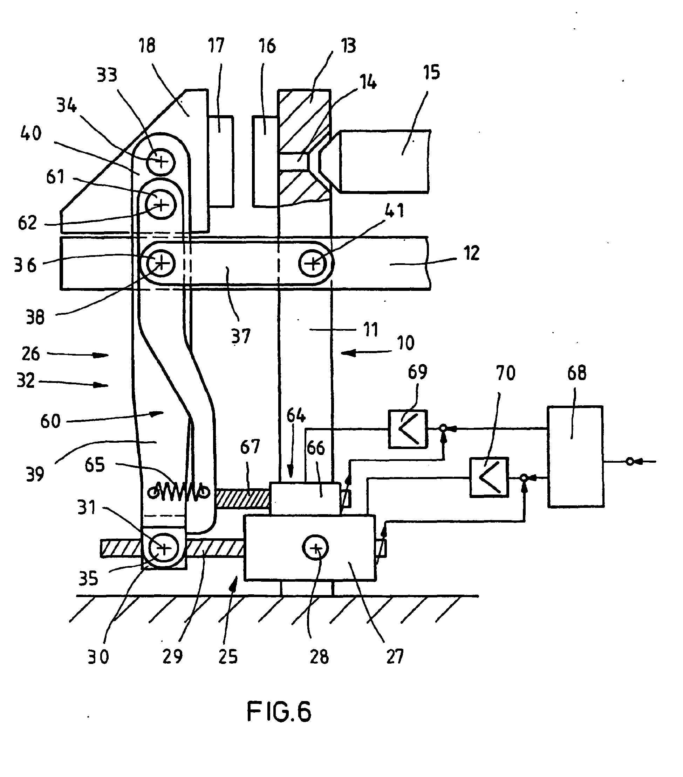

Bei den Ausführungsbeispielen nach den Figuren 6 bis 9 ist wiederum ein Hebel 32 vorhanden, der über ein Drehgelenk 35 mit einer das Ausgangselement eines elektromotorischen Antriebs 25 darstellenden Lagerachse 30 und über ein Drehgelenk 33 mit einer Drehachse 34 mit der beweglichen Formaufspannplatte 18 gekoppelt ist. Anders als bei den Ausführungsbeispielen nach den Figuren 1 bis 5 ist nun jedoch der Hebel 32 nicht unmittelbar über ein Drehgelenk 36 mit Drehachse 38 mit einem Lenker 37 verbunden, der um die Drehachse 41 verschwenkbar am Gestell 10 der Spritzgießmaschine gelagert ist. Vielmehr ist zwischen dem Hebel 32 und dem Lenker 37 ein weiterer Hebel 60 eingefügt, der mit dem Lenker 37 über das Drehgelenk 36 verbunden ist. Der Hebel 60 ist weiterhin über ein Drehgelenk 61 mit einer Drehachse 62, die zwischen den beiden Drehachsen 34 und 38 parallel zu diesen verläuft, mit dem Hebel 32 gekoppelt. Der Hebel 60 ist bezüglich der Drehachse 38 ein zweiarmiger Hebel, der sich bis nahe an die Drehachse 31 zwischen dem Hebel 32 und der Lagerachse 30 erstreckt. Nahe an der Drehachse 31, also in einem großen Abstand zur Drehachse 38 ist an den beiden Hebeln 32 und 60 eine Schraubenfeder 65 eingehängt, die vorgespannt ist, und die beiden Hebel bis zu einer gewissen Grenzkraft in spielfreier Anlage aneinander hält. Unterhalb dieser Grenzkraft können die beiden Hebel 32 und 60 zusammen wie ein einziger Hebel verschwenkt werden.

Bei dem Ausführungsbeispiel nach Figur 6 sitzt auf dem Elektromotor 27 ein weiterer kleinerer Elektromotor 66, aus dem in Richtung auf den Hebel 60 zu eine Gewindespindel 67 herausragt, die selbsthemmend mit einer im Gehäuse des Elektromotors 66 drehfest gehaltenen, in Figur 6 nicht näher dargestellten Spindelmutter kämmt und je nach Drehrichtung des Elektromotors 66 vor- oder zurückgefahren wird. Die Spindel 67 kann den Hebel 60 in einem großen Abstand von der Drehachse 38 gegen eine Verschwenkung entgegen dem Uhrzeigersinn um die Achse 38 abstützen.

Die beiden Elektromotoren 27 und 66 sind drehzahlgeregelt und werden über ein elektrisches Steuergerät 68 und Verstärkerstufen 69 und 70 gesteuert.

Um von der in Figur 6 gezeigten Endstellung der Formaufspannplatte 18 aus die Form zu schließen, dreht der Elektromotor 27 in eine solche Richtung, daß sich das Ende des Hebels 32 vom Elektromotor 27 entfernt. Die auf die bewegliche Formaufspannplatte 18 über das Drehgelenk 33 auszuübende Kraft ist so gering, daß die Feder 65 die beiden Hebel 32 und 60 in Anlage aneinander halten kann und sich diese beiden Hebel gemeinsam um die Drehachse 38 drehen. Die Spindel 67 wird vom Elektromotor 66 dem Hebel 60 nachgefahren, ohne diesen zu berühren, so daß sie sich leicht drehen läßt. Wenn die Form geschlossen ist, wird der Elektromotor 66 ausgeschaltet. Die vom weiter bestromten Elektromotor 27 auf den Hebel 32 ausgeübte Kraft steigt stark an. Die Feder 65 kann eine Veränderung der Lage der Drehachse 34 des Drehgelenks 33 relativ zur Drehachse 62 des Drehgelenks 61 nicht mehr verhindern, so daß bei einer weiteren Verschwenkung des Hebels 32 die Drehachse 62 zur Hebelachse wird. Dadurch ist das Verhältnis zwischen dem langen Hebelarm 39 und dem kurzen Hebelarm 40 des Hebels 32 noch größer geworden, so daß die vom elektromotorischen Antrieb 25 auf den Hebel 32 wirkende Kraft in hohem Maße übersetzt wird. Während der Verschwenkung des Hebels 32 um die Drehachse 62 wird der Hebel 60 durch die Spindel 67 abgestützt.

Beim Öffnen der Form wird der Elektromotor 66 so angesteuert, daß die Spindel 67 den nun entgegen dem Uhrzeigersinn schwenkenden Hebel 32 und 60 vorausfährt.

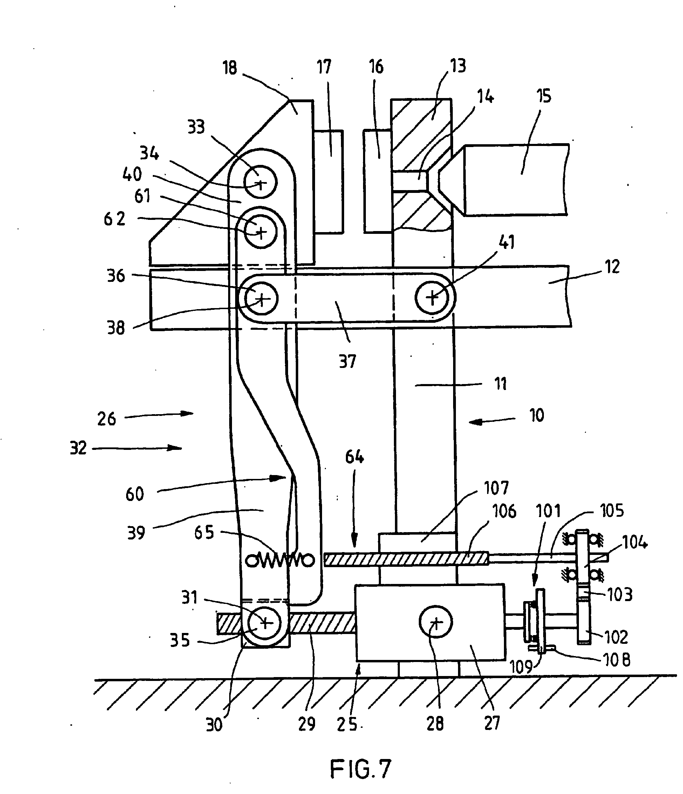

Bei dem Ausführungsbeispiel nach Figur 7 besitzt der Elektromotor 27 auch auf der der Gewindespindel 29 gegenüberliegenden Seite einen Abtrieb, über den über eine Rutschkupplung 101 ein in der Motorachse angeordnetes Ritzel 102 drehbar ist. Von diesem ist über ein kleines Zwischenzahnrad 103 ein Zahnrad 104 antreibbar, das in Richtung seiner Achse ortsfest angeordnet ist und über ein Schubgelenk verdrehsicher mit einem keilverzahnten Abschnitt 105 einer zweiten Gewindespindel 106 gekoppelt ist. Diese verläuft parallel zur Motorachse und zur Achse der Gewindespindel 29 und geht durch eine Spindelmutter 107 hindurch, die ortsfest auf dem Elektromotor 27 angeordnet ist. Die Rutschkupplung, die Zahnräder 102, 103 und 104, die Gewindespindel 106 und die Spindelmutter 107 machen somit die Schwenkbewegungen des Elektromotors 27 um die Drehachse 28 mit. Die Gewindespindel 106 ragt aus der Spindelmutter 107 in Richtung auf den Hebel 60 zu heraus und hat von diesem nach Figur 7 einen geringen Abstand. Die ineinander greifenden Gewinde von Gewindespindel 106 und Spindelmutter 107 sind so ausgebildet, daß der Eingriff selbsthemmend ist, das heißt, daß die Gewindespindel nicht allein durch eine axial auf sie ausgeübte Kraft unter Drehung axial bewegt werden kann.

Als zusätzliche Sicherheit gegen eine solche nicht gewünschte axiale Bewegung der Gewindespindel kann, wie in Figur 7 gezeigt, eine Bremse 108 vorgesehen sein, die zur Verhinderung einer Drehung der Gewindespindel betätigt werden kann. Grundsätzlich kann die Bremse 108 an irgendeiner Stelle zwischen der Sekundärseite der Rutschkupplung und der Gewindespindel einschließlich angeordnet sein. Vorliegend wirkt sie auf die sekundärseitige Scheibe 109 der Rutschkupplung.

Um von der in Figur 7 gezeigten Endstellung der Formaufspannplatte 18 aus die Form zu schließen, dreht der Elektromotor 27 wie bei dem Ausführungsbeispiel nach Figur 6 in eine solche Richtung, daß sich das Ende des Hebels 32 vom Elektromotor 27 entfernt und sich die Formaufspannplatte 18 der Formaufspannplatte 13 nähert. Zugleich treibt der Elektromotor 27 über die Rutschkupplung 101 die Gewindespindel 106 so an, daß sie dem Hebel 60 mit einem kleinen Abstand folgt. Wenn die Form geschlossen ist, steigt die vom weiter bestromten Elektromotor 27 auf den Hebel 32 ausgeübte Kraft stark an. Es schwenkt nun der Hebel 32 um die Drehachse 62. Der Hebel 60 schwenkt entgegen dem Uhrzeigersinn um die Drehachse 38 und legt sich an die selbsthemmende Gewindespindel 106 an. Das Drehmoment zwischen der Gewindespindel 106 und der Spindelmutter 107 steigt, die Kupplung 105 rutscht und die Gewindespindel 106 steht still. Der Elektromotor 27 dreht weiter und bewegt nun den Hebel 32 um die Drehachse 62.

Beim Öffnen der Form wird der Elektromotor 27 in umgekehrter Drehrichtung angesteuert und fährt die Hebel 32 und 60 sowie die Gewindespindel 106 wieder in die in Figur 7 gezeigten Positionen zurück.

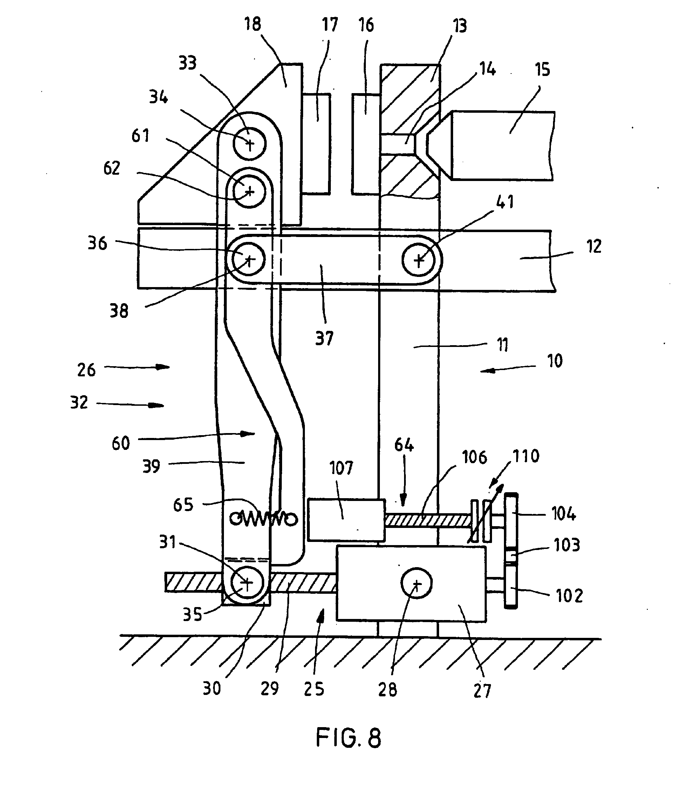

Bei dem Ausführungsbeispiel nach Figur 8 sitzt das Zahnrad 102 unmittelbar auf einem Stummel der Welle des Elektromotors 27. Es treibt über das Zwischenrad 103 das Zahnrad 104 an, das achsgleich mit der Gewindespindel 106 angeordnet ist. Zwischen das Zahnrad 104 und die Gewindespindel 106 ist eine Schaltkupplung 110 eingefügt. Zahnrad 104, Schaltkupplung 110 und Gewindespindel 106 sind in axialer Richtung nicht bewegbar. Die Gewindespindel taucht selbsthemmend in eine Spindelmutter 107 ein, die verdrehsicher axial geführt ist, sich also beim Drehen der Gewindespindel 106 axial bewegt, und nach Figur 8 einen kleinen Abstand von dem Hebel 60 hat. Die in der Achse der Gewindespindel 106 befindlichen Bauteile Zahnrad 104, Schaltkupplung 110 und Spindelmutter 107 machen zusammen mit der Gewindespindel 106 die Schwenkbewegungen des Elektromotors 27 um die Drehachse 28 mit.

Natürlich könnte auch bei dem Ausführungsbeispiel nach Figur 8 eine zusätzliche Bremse für die Gewindespindel 106 vorgesehen werden.

Um von der in Figur 8 gezeigten Endstellung der Formaufspannplatte 18 aus die Form zu schließen, dreht der Elektromotor 27 wie bei dem Ausführungsbeispiel nach Figur 6 oder 7 in eine solche Richtung, daß sich das Ende des Hebels 32 vom Elektromotor 27 entfernt und sich die Formaufspannplatte 18 der Formaufspannplatte 13 nähert. Zugleich treibt der Elektromotor 27 über die geschlossene Schaltkupplung 110 die Gewindespindel 106 so an, daß die Spindelmutter 107 dem Hebel 60 mit einem kleinen Abstand folgt. Wenn die Form geschlossen ist, wird die Schaltkupplung 110 geöffnet. Die vom weiter bestromten Elektromotor 27 auf den Hebel 32 ausgeübte Kraft steigt stark an. Es schwenkt nun der Hebel 32 um die Drehachse 62. Der Hebel 60 schwenkt entgegen dem Uhrzeigersinn um die Drehachse 38 und legt sich an die selbsthemmende Spindelmutter 107 an.

Der Elektromotor 27 dreht weiter und bewegt nun allein den Hebel 32 um die Drehachse 62.

Beim Öffnen der Form wird der Elektromotor 27 in umgekehrter Drehrichtung angesteuert und fährt die Hebel 32 und 60 sowie die Spindelmutter 107 wieder in die in Figur 8 gezeigten Positionen zurück.

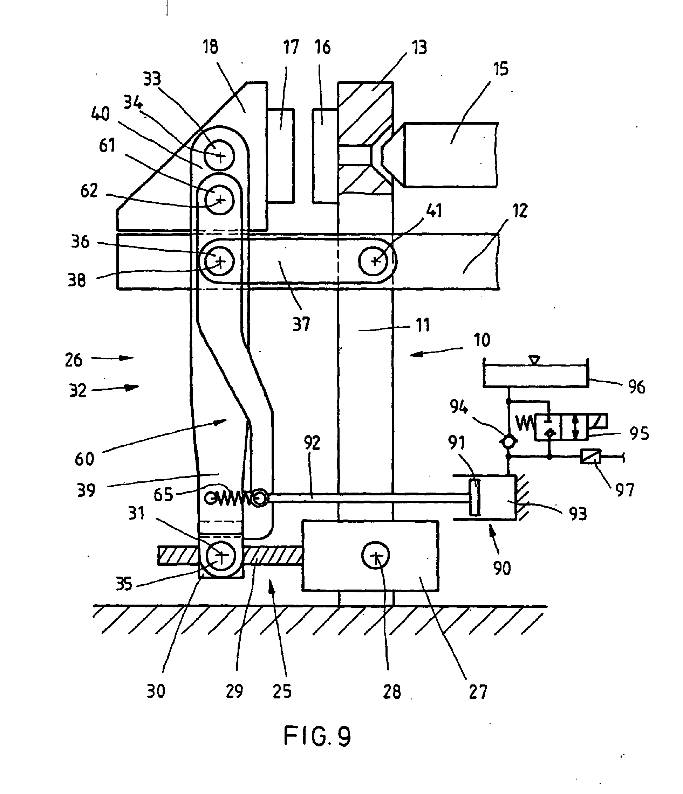

Bei dem Ausführungsbeispiel nach Figur 9 ist der Elektromotor 66 mit Spindel 67 aus Figur 6 durch einen einfach wirkenden Hydrozylinder 90 ersetzt, dessen Kolben 91 über eine Kolbenstange 92 in einem großen Abstand zur Drehachse 38 am Hebel 60 angelenkt ist. Die geringe Änderung der vertikalen Lage des Anlenkpunktes während einer Verschwenkung der Hebel 32, 60 kann durch Verschwenkbarkeit des Kolbens 91 oder durch eine Verschwenkbarkeit des gesamten Hydrozylinders 90 ausgeglichen werden. Der Kolben 91 begrenzt einen Druckraum 93, dem über ein zu ihm hin öffnendes Rückschlagventil 94 Druckflüssigkeit aus einem Druckflüssigkeitsvorratsbehälter 96 zufließen kann, der auf einem höheren Niveau als der Hydrozylinder 90 angeordnet ist. Im Bypass zu dem Rückschlagventil 94 liegt ein 2/2-Wege-Sitzventil 95, das von einem Elektromagneten aus einer Ruhestellung, in der es eine Verbindung vom Druckraum 93 zu dem Behälter 96 leckagefrei absperrt, in eine Durchgangsstellung geschaltet werden kann. An den Druckraum 93 ist ein Druckaufnehmer 97 angeschlossen, der ein dem im Druckraum herrschenden Druck entsprechendes elektrisches Signal an eine nicht näher dargestellte Auswerteelektronik gibt.

Bei der Ausführung nach Figur 9 wird während des Schließens der Form der Kolben 91 von dem Hebel 60 nachgezogen, wobei sich der Druckraum 93 vergrößert und Druckflüssigkeit aus dem Behälter 96 über das Rückschlagventil 94 nachfließt. Das Ventil 95 ist in seiner Ruhestellung, sperrt also. Ist die Form geschlossen, reicht die Kraft der Feder 65 nicht mehr aus, um ein Verschwenken des Hebels 60 relativ zum Hebel 32 zu verhindern. Der Hebel 60 übt deshalb auf den Kolben 91 eine Kraft aus, die zu einem entsprechenden Druckaufbau im Druckraum 93 und zu einer hydraulischen Abstützung des Hebels 60 führt. Die Höhe des Drucks im Druckraum 93 ist dabei ein Maß für die aufgebrachte Schließkraft. Mithilfe des Druckaufnehmers 97 und der entsprechenden Auswerte- und Steuerelektronik läßt sich somit über die Ansteuerung des Elektromotors 27 auf sehr einfache Weise eine gewünschte Schließkraft einstellen.

Zum Öffnen der Form wird das Ventil 95 geöffnet, so daß Druckflüssigkeit aus dem Druckraum 93 in den Behälter 96 verdrängt werden kann.

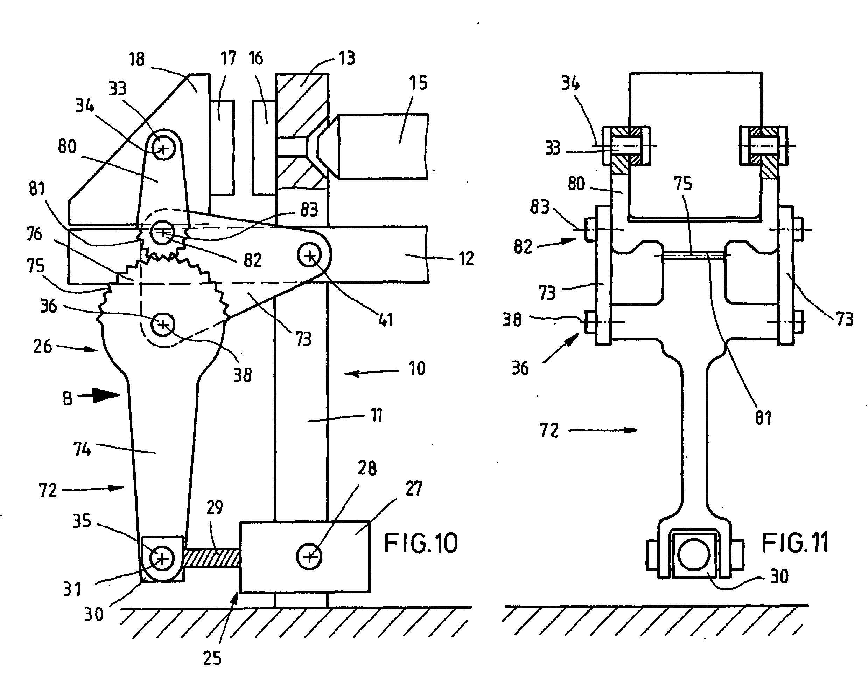

Bei der Ausführung nach den Figuren 10 und 11 ist der elektromotorische Antrieb 25 mit seinem Ausgangselement 30 über ein Drehgelenk 35 mit einer Drehachse 31 mit einem zweiarmigen Hebel 72 gekoppelt, der sich in der in Figur 6 gezeigten Endstellung der Formaufspannplatte 18 wie der Hebel 32 der oben beschriebenen Ausführungsbeispiele vertikal erstreckt. Auch der Hebel 72 ist über ein Drehgelenk 36 mit einer Drehachse 38 mit einem Lenker 73 gekoppelt, der über ein Drehgelenk mit einer Drehachse 41 schwenkbar am Gestell 10 der Maschine gelagert ist. Allerdings liegt die Drehachse 38 unterhalb einer durch die Drehachse 41 gehenden Horizontalen. Der Hebel 72 hat einen von der Drehachse 38 zur Drehachse 31 reichenden langen Hebelarm 74 und einen Zahnkranz 75, der zentrisch zur Drehachse 38 liegt und dessen Abstand von der Drehachse 38 wesentlich kleiner als die Länge des Hebelarms 74 ist. Der Radius des Zahnkranzes 75 kann als Länge eines kurzen Hebelarms 76 betrachtet werden, dessen Winkellage zum anderen Hebelarm sich allerdings bei einer Verschwenkung des Hebels 72 ändert. Der Hebel 72 ist, wie aus Figur 11 ersichtlich, symmetrisch bezüglich einer Mittelebene der Maschine ausgebildet und angeordnet. Auf jeder Seite der Formaufspannplatten ist ein Lenker 73 vorhanden. Über Drehgelenke 33 mit einer gemeinsamen Drehachse 34 ist an der beweglichen Formaufspannplatte 18 ein diese umgreifender U-förmiger weiterer zweiarmiger Hebel 80 angelenkt. Der kurze Hebelarm dieses Hebels 80 wird durch einen Zahnkranz 81 gebildet, der mit dem Zahnkranz 75 des Hebels 72 kämmt. Der Hebel 80 ist insgesamt kleiner als der Hebel 72 hat sowohl einen kürzeren langen Arm als auch einen kürzeren kurzen Arm als der Hebel 72. Er ist mit dem Lenker 73 über ein Drehgelenk 82 verbunden, dessen Drehachse 83 von der Drehachse 38 zwischen dem Hebel 72 und dem Lenker 73 einen solchen Abstand hat, daß die beiden Zahnkränze 75 und 81 in Eingriff miteinander gehalten werden.

Alternativ können entsprechend den bisher beschriebenen Ausführungsbeispielen auch bei denjenigen nach den Figuren 10 und 11 zwei separate Hebel 72 und zwei separate Hebel 80 vorhanden sein.

In den Figuren 10 und 11 sind die Formaufspannplatte 18, die elektromotorische Antriebseinheit 25 und das Hebelgetriebe 26 in Positionen gezeigt, in denen die Formhälften 16 und 17 weit voneinander entfernt, die Form also offen ist. Die Drehachsen 34, 83, 38 und 31 liegen vertikal übereinander. Zum Schließen der Form wird nun der Elektromotor 27 in eine derartige Richtung drehend angesteuert, daß sich die Lagerachse 30 näher zu ihm hin bewegt. Der Hebel 72 wird also um die Drehachse 38, nach Figur 6 betrachtet, entgegen dem Uhrzeigersinn verschwenkt. Wegen der Kopplung über die Zahnkränze 75 und 81 wird der zweite Hebel 80 um die Drehachse 83 im Uhrzeigersinn verschwenkt. Wegen der geradlinigen Führung für die Formaufspannplatte 18, aufgrund derer die Drehachse 34 in einem konstanten Abstand von der Quertraverse 12 bewegt wird, wandern die Drehachsen 83, 38 und 31 nach oben, was durch die Verschwenkbarkeit des Lenkers 73 und des Elektromotors 27 sowie wegen der Verschwenkbarkeit der Achse 30 gegenüber dem Hebel 72 möglich ist. Wenn die Form geschlossen ist, ist der Hebel 80 zur Vertikalen geneigt. Beim Aufbau einer hohen Zuhaltekraft und dem weiteren Verschwenken des Hebels 72 tritt deshalb ein Kniehebeleffekt zwischen den beiden Hebeln 72 und 80 auf, so daß bei einer großen Kraftübersetzung eine sehr hohe Zuhaltekraft erzeugt wird, ohne daß die Teile der elektromotorischen Antriebseinheit 25 zu stark belastet würden oder ein sehr großer Elektromotor notwendig wäre. Zum Öffnen der Form wird der Elektromotor 27 in entgegengesetzte Drehrichtung angesteuert.

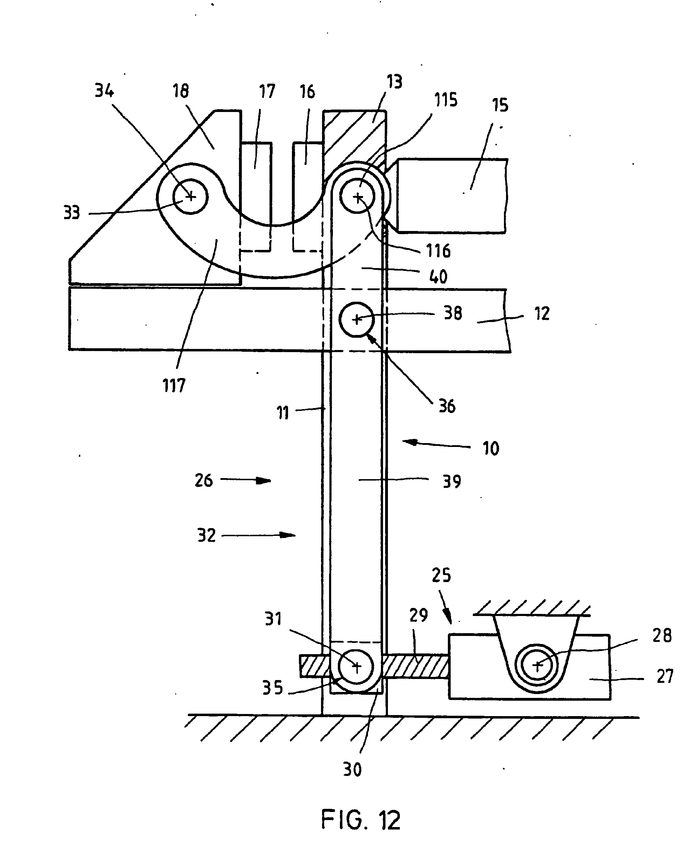

Das Ausführungsbeispiel nach Figur 12 hat wie das erste Ausführungsbeispiel zu beiden Seiten der Formaufspannplatten 13 und 18 ein Hebelgetriebe 26 mit einem zweiarmigen Hebel 32, der identisch zum ersten Ausführungsbeispiel über eine sich am Ende seines langen Hebelarms 39 befindlichen Lagerachse 30 und eine Gewindespindel 29 von einem Elektromotor 27 verschwenkt werden kann. Der Elektromotor 27 ist um eine gestellfeste Drehachse 28 verschwenkbar. Er ist nun anders als beim ersten Ausführungsbeispiel nicht unterhalb der festen Formaufspannplatte 13, sondern in Richtung auf die Einspritzeinheit verschoben angeordnet. Der im wesentlich vertikal verlaufende Hebel 32 ist gegenüber dem ersten Ausführungsbeispiel in Richtung auf die feste Formaufspannplatte 13 zu gewandert und befindet sich, in Verschieberichtung der beweglichen Formaufspannplatte 18 betrachtet auf Höhe der festen Formaufspannplatte 13. Über ein Drehgelenk 36 mit einer nun gestellfesten Hebelachse 38. ist der Hebel 32 an einer Quertraverse 12 drehbar gelagert

Am Ende seines kurzen Hebelarms 40 ist der Hebel 32 über ein Drehgelenk 115 mit einer Drehachse 116 mit einem Lenker 117 verbunden, der sich zur beweglichen Formaufspannplatte 18 hin erstreckt und über das Drehgelenk 33 mit der Drehachse 34 mit der Formaufspannplatte 18 gekoppelt ist. In dem Betriebszustand, wie er in Figur 12 gezeigt ist, schneidet außer der Drehachse 34 auch die Drehachse 116 die Achse des Plastifizierzylinders 15 und damit der Achse der Maschine. Der Lenker 117 ist aus der durch die beiden Drehachsen 34 und 116 aufgespannten Ebene, in dem Zustand nach Figur 12 mit der durch die Drehachse 34 und die Maschinenachse aufgespannten Ebene zusammenfällt, nach unten herausgebogen, so daß er, von der Seite gesehen, die beiden Werkzeughälften 16 und 17 nur wenig verdeckt und diese noch leicht zugänglich sind.

Bei dem Ausführungsbeispiel nach Figur 12 wandert, wenn der Hebel 32 zum Schließen der Form von dem Elektromotor 27 im Uhrzeigersinn verschwenkt wird, die Drehachse 116, nach Figur 12 betrachtet, nach rechts und nach unten aus der durch die Drehachse 34 und die Maschinenachse aufgespannten Ebene heraus. Der Lenker folgt der Bewegung des Drehgelenks, wobei die Bewegung des Drehgelenks nach rechts die für das Schließen der Form wesentliche Bewegung ist und die Bewegung nach unten durch eine leichte Verschwenkung des Lenkers 117 ausgeglichen wird.

Aus der Beschreibung der einzelnen Ausführungsbeispiele ergibt sich, daß beim ersten Ausführungsbeispiel nach den Figuren 1 und 2 und beim zehnten Ausführungsbeispiel nach Figur 12 die Kraftübersetzung zwischen der elektromotorischen Antriebseinheit 25 und der Formaufspannplatte 18 sowohl während der Schließbewegung als auch während des Zuhaltens der Form im wesentlichen durch die unterschiedlichen Längen der Hebelarme 39 und 40 des Hebels 32 bestimmt ist. Die genannten Ausführungsbeispiele sind deshalb in erster Linie für kleinere Spritzgießmaschinen verwendbar. Bei den Ausführungsbeispielen nach den Figuren 3 bis 11 geht die Kraftübersetzung zum Zuhalten der Form wesentlich über die Kraftübersetzung während der Schließbewegung, insbesondere zu Beginn der Schließbewegung hinaus. Diese Ausführungsbeispiele von Antriebsvorrichtungen sind deshalb auch für größere Spritzgießmaschinen mit hohen Zuhaltekräften geeignet.

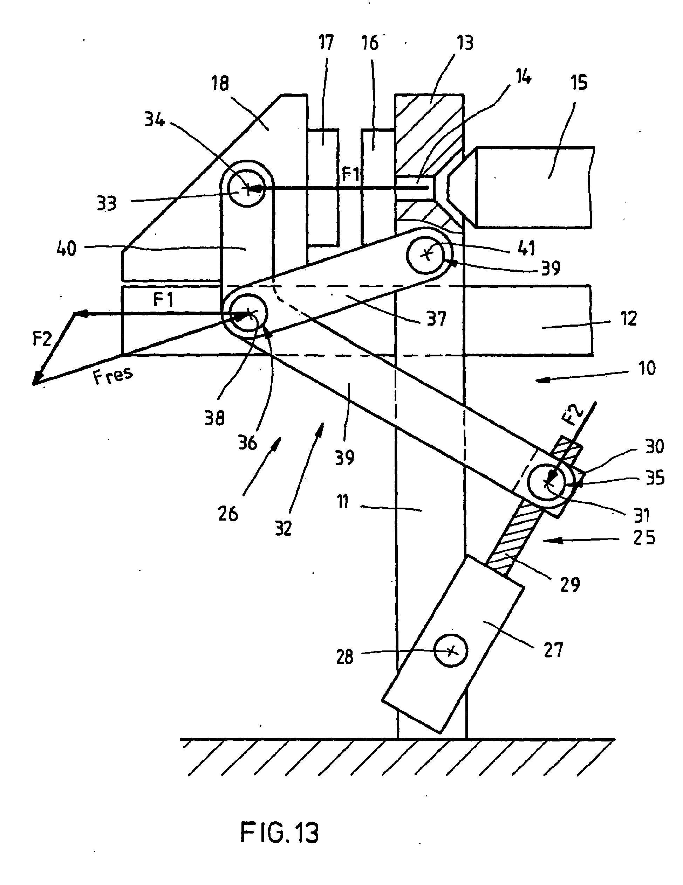

Das Ausführungsbeispiel nach Figur 13 ist weitgehend baugleich zu dem Ausführungsbeispiel nach den Figuren 1 und 2 und weist wiederum ein Hebelgetriebe 26 mit zwei parallel wirkenden und identisch aufgebauten Hebelanordnungen an beiden Seiten der Formaufspannplatte 18 auf. Der Elektromotor 27 ist anders als bei dem Ausführungsbeispiel nach Figur 12 wiederum an den Standbeinen 11 um die Achse 28 schwenkbar gelagert, ist jedoch so angeordnet, daß die Gewindespindel 29 schräg nach oben in Richtung auf den Plastifizierzylinder 15 weist. Jede Hebelanordnung besitzt einen zweiarmigen Hebel 32, der als Winkelhebel ausgebildet ist und der am Ende seines kurzen Hebelarmes 40 über ein Drehgelenk 33 mit einer zur Formaufspannplatte 18 ortsfesten und parallel zu der Achse 28 verlaufenden Drehachse 34 mit der Formaufspannplatte 18 verbunden ist. Der Hebelarm 40 erstreckt sich im wesentlichen senkrecht zur Bewegungsrichtung der beweglichen Formaufspannplatte 18. In Figur 13 nimmt er gerade genau die senkrechte Position ein. Der lange Hebelarm 39 schließt mit dem kurzen Hebelarm 40 einen Winkel von etwa 120 Grad ein und erstreckt sich von der Hebelachse 38 aus schräg nach unten über die Standbeine 11 hinweg. An seinem Ende greift ein Lagerzapfen der Lagerachse 30 in eine Bohrung ein. Somit ist jeder Hebel 32 über ein Drehgelenk 35, dessen Achse die Achse 31 ist, mit der Lagerachse 30 und damit vom Elektromotor 27 verschwenkbar. Durch die Ausbildung des Hebels 32 als Winkelhebel ist der Raum unterhalb der Formaufspannplatte 18 weitgehend frei von Bauteilen der Antriebsvorrichtung.

Im Abstand zu den Drehachsen 31 und 34 ist wie bei dem Ausführungsbeispiel nach den Figuren 1 und 2 jeder Hebel 32 über das die Drehachse 38 aufweisende Drehgelenk 36 mit einem Lenker 37 gekoppelt der sich von der Drehachse 38 aus in Richtung auf die feste Formaufspannplatte 13 und die Standbeine 11 zu erstreckt und über das Drehgelenk 39 mit der gestellfesten Drehachse 41 am Gestell 10 schwenkbar gelagert ist. In der in Figur 13 gezeigten Lage des Hebels 32 verläuft eine in der Zeichenebene liegende Verbindungslinie zwischen den beiden Drehachsen 38 und 41 in Richtung der Kraftresultierenden Fᵣₑₛ der beiden an den Hebelarmen 39 und 40 des Hebels 32 angreifenden Kräfte F₁ und F₂. Bei einer solchen Ausrichtung des Lenkers 37 sind die Verhältnisse für die Abstützung des Hebels 32 besonders günstig. Es mag deshalb vorteilhaft sein, daß die in der Figur 13 gezeigten Positionen von Hebel 32 und Lenker 37 erst bei geschlossener Form eingenommen werden, wenn die hohe Zuhaltekraft notwendig ist.

Um von der in der Figur 13 gezeigten Stellung der Formaufspannplatte 18 aus die Form zu schließen, wird der Elektromotor 27 derart angesteuert, daß sich die Gewindespindel 29 in eine solche Richtung dreht, daß die Lagerachse 30 auf das Gehäuse des Elektromotors 27 zuwandert. Dadurch werden die Hebel 32, nach Figur 13 betrachtet, im Uhrzeigersinn um die Drehachse 38 verschwenkt. Im übrigen ist auch der weiter Bewegungsablauf wie bei dem Ausführungsbeispiel nach den Figuren 1 und 2, so daß eine nähere Beschreibung nicht notwendig erscheint.

## Patentansprüche

1. Antriebsvorrichtung für die in einer Stellbewegung geradlinig zu bewegende und mit hoher Schließkraft zu zu haltende Formaufspannplatte (18) einer Spritzgießmaschine mit einem Maschinengestell (10),
mit einer elektromotorischen Antriebseinheit (25), die einen Elektromotor (27) und ein in Richtung der Achse des Elektromotors (27) geradlinig bewegbares Ausgangselement (30) aufweist,
und mit einem Hebelgetriebe (26), das in der Kraftkette zwischen dem Ausgangselement (30) der elektromotorischen Antriebseinheit (25) und der Formaufspannplatte (18) angeordnet ist und über das von der elektromotorischen Antriebseinheit (25) die Formaufspannplatte (18) in der Stellbewegung bewegbar und die hohe Schließkraft untersetzt abstützbar ist,
wobei das Hebelgetriebe (26) einen zweiarmigen, einen kurzen Hebelarm (40,76) und einen langen Hebelarm (39,74) aufweisenden Hebel (32, 72), dessen langer Hebelarm (39,74) sich in der Kraftkette näher als der kurze Hebelarm (40, 76) am Ausgangselement (30) des elektromotorischen Antriebs (25) befindet und dessen kurzer Hebelarm (40, 76) im wesentlichen senkrecht zur Bewegungsrichtung der Formaufspannplatte (18) verläuft, und einen Lenker (37, 52, 73, 117) umfaßt, der einerseits an einem Maschinenteil (11, 18) verschwenkbar gelagert und über ein Drehgelenk (36, 115) mit dem Hebel (32, 72) gekoppelt ist,
**dadurch gekennzeichnet,**
**daß** der Hebel (32, 72) und der Lenker (37, 52, 73, 117) so angeordnet sind, daß der Lenker (37, 52, 73, 117) beim Aufbringen der hohen Schließkraft auf Zug beansprucht ist.

2. Antriebsvorrichtung nach Anspruch 1, **dadurch gekennzeichnet, daß** der Hebel (32, 72) ein gestreckter Hebel ist und dementsprechend auch der lange Hebelarm (39, 74) im wesentlichen senkrecht zur Bewegungsrichtung der Formaufspannplatte (18) verläuft.

3. Antriebsvorrichtung nach Anspruch 1, **dadurch gekennzeichnet, daß** der Hebel (32) ein Winkelhebel ist und der lange Hebelarm (39) insbesondere mit der Richtung der Bewegung der Formaufspannplatte (18) beim Schließen der Form einen Winkel kleiner als 90 Grad einschließt.

4. Antriebsvorrichtung nach einem vorhergehenden Anspruch, **dadurch gekennzeichnet, daß** der Elektromotor (27) bei horizontaler Maschinen achse unterhalb einer festen Formaufspannplatte (13) oder der Einspritzeinheit (15) der Spritzgießmaschine angeordnet ist.

5. Antriebsvorrichtung nach einem vorhergehenden Anspruch, **dadurch gekennzeichnet, daß** das Hebelgetriebe (26) über ein Drehgelenk (33) mit einer bezüglich der beweglichen Formaufspannplatte (18) ortsfesten Drehachse (34) mit dieser Formaufspannplatte (18) gekoppelt ist.

6. Antriebsvorrichtung nach einem vorhergehenden Ansprüche, **dadurch gekennzeichnet, daß** der Hebel (32) über einen Lenker (117), der über ein Drehgelenk (115) am kurzen Hebelarm (40) angelenkt ist, mit der beweglichen Formaufspannplatte (18) gekoppelt ist.

7. Antriebsvorrichtung nach einem der Ansprüche 1 bis 5, **dadurch gekennzeichnet, daß** der Hebel (32) über ein Drehgelenk (33) mit der beweglichen Formaufspannplatte (18) gekoppelt ist und eine Hebelachse (38) besitzt, die während der Stellbewegung der Formaufspannplatte (18) verlagerbar ist.

8. Antriebsvorrichtung nach einem der Ansprüche 1 bis 6, **dadurch gekennzeichnet, daß** der Hebel (32) eine gestellfeste Hebelachse (38) besitzt.

9. Antriebsvorrichtung nach einem der Ansprüche 1 bis 7, **dadurch gekennzeichnet, daß** der Hebel (32, 72) über ein Drehgelenk (36), dessen Drehachse (38) die Hebelachse ist, mit einem verschwenkbaren Lenker (37, 52, 73) gekoppelt ist.

10. Antriebsvorrichtung nach Anspruch 9, **dadurch gekennzeichnet, daß** der Lenker (37, 52, 73) im wesentlichen in Richtung der Resultierenden der an den beiden Hebelarmen (39, 40) angreifenden Kräfte ausgerichtet ist.

11. Antriebsvorrichtung nach Anspruch 9 oder 10, **dadurch gekennzeichnet, daß** sich der Lenker (37, 52, 73) auf derselben Seite des Hebels (32, 72) wie eine feste Formaufspannplatte (13) befindet.

12. Antriebsvorrichtung nach einem der Ansprüche 9 bis 11, **dadurch gekennzeichnet, daß** der Lenker (37, 73) im Abstand zu dem Drehgelenk (36) zwischen ihm und dem Hebel (32, 72) um eine gestellfeste Drehachse (41) verschwenkbar ist.

13. Antriebsvorrichtung nach einem vorhergehenden Anspruch, **dadurch gekennzeichnet, daß** das Ausgangselement (30) der elektromotorischen Antriebseinheit (25) über ein Drehgelenk (35), dessen Drehachse (31) parallel zu der Hebelachse (38) verläuft, unmittelbar mit dem Hebel (32, 72) gekoppelt ist und daß der Elektromotor (27) um eine zur Hebelachse (38) parallele und gestellfeste Drehachse (28) verschwenkbar ist.

14. Antriebsvorrichtung nach einem der Ansprüche 1 bis 13, **dadurch gekennzeichnet, daß** eine Kniehebelanordnung (45, 46) mit einem ersten Glied (45) und mit einem mit diesem über ein erstes Drehgelenk (44) verbundenen zweiten Glied (46) vorhanden ist, daß das erste Glied (45) über ein vom ersten Drehgelenk (44) beabstandeten zweiten Drehgelenk (35) mit dem Hebel (32) und das zweite Glied (46) mit einem vom ersten Drehgelenk (44) beabstandeten dritten Drehgelenk (47) mit dem Maschinengestell (10) verbunden ist und daß die Kniehebelanordnung (45, 46) vom Ausgangselement (30) der elektromotorischen Antriebseinheit (25) streck- und beugbar ist.

15. Antriebsvorrichtung nach einem vorhergehenden Anspruch, **dadurch gekennzeichnet, daß** die Länge wenigstens eines Hebelarms (39, 40) des Hebels (32) veränderbar ist.

16. Antriebsvorrichtung nach Anspruch 15, **dadurch gekennzeichnet, daß** die Länge der Hebelarme (39, 40) durch eine Verlagerung der Hebelachse (38) veränderbar ist.

17. Antriebsvorrichtung nach Anspruch 16, **dadurch gekennzeichnet, daß** ein zweiter Hebel (60) vorhanden ist, der um eine Hebelachse (38) verschwenkbar und mit dem ersten Hebel (32) über ein Drehgelenk (61) gekoppelt ist, daß der Abstand dieses Drehgelenks (61) vom Ende des kurzen Hebelarms (40) des sten Hebels (32) kleiner als der Abstand der Hebelachse (38) des zweiten Hebels (60) vom Ende des kurzen Hebelarms (40) des ersten Hebels (32) ist, daß der zweite Hebel (60) und der erste Hebel (32) gemeinsam um die Hebelachse (38) des zweiten Hebels (60) verschwenkbar sind und daß bei Abstützung des zweiten Hebels (60) gegen ein Zurückschwenken durch eine Blockiereinrichtung (64) der erste Hebel (32) allein um die Achse (62) des Drehgelenks (61) zwischen ihm und dem zweiten Hebel (60) verschwenkbar ist.

18. Antriebsvorrichtung nach Anspruch 17, **dadurch gekennzeichnet, daß** der erste Hebel (32) und der zweite Hebel (60) durch eine lösbare Kupplung (65) zu einer festen Einheit verbindbar und als solche von der unter Umgehung des zweiten Hebels (60) am ersten Hebel (32) angreifenden elektromotorischen Antriebseinheit (25) verschwenkbar sind.

19. Antriebsvorrichtung nach Anspruch 18, **dadurch gekennzeichnet, daß** die lösbare Kupplung eine vorgespannte Feder (65) umfaßt, die bis zu einer Grenzkraft den zweiten Hebel (60) an einem Anschlag des ersten Hebels (32) hält.

20. Antriebsvorrichtung nach Anspruch 18 oder 19, **dadurch gekennzeichnet, daß** die beiden Hebel (32, 60) durch die lösbare Kupplung (65) nahe am Ende des langen Hebelarms (39) des ersten Hebels (32) miteinander koppelbar sind.

21. Antriebsvorrichtung nach einem der Ansprüche 17 bis 20, **dadurch gekennzeichnet, daß** die Blockiereinrichtung (64) für den zweiten Hebel (60) einen Anschlag (67, 106, 107) besitzt, der dem zweiten Hebel (60) nach- und vorwegführbar ist.

22. Antriebsvorrichtung nach einem der Ansprüche 17 bis 21, **dadurch gekennzeichnet, daß** die Blockiereinrichtung (64) für den zweiten Hebel (60) mit dem Elektromotor (27) die gleichen Schwenkbewegungen ausführt.

23. Antriebsvorrichtung nach einem der Ansprüche 17 bis 22, **dadurch gekennzeichnet, daß** der Anschlag (106, 107) der Blockiereinrichtung (64) für den zweiten Hebel (60) durch den Elektromotor (27) nach- und vorwegführbar ist, wobei zwischen einem entsprechenden Abtrieb des Elektromotors (27) und dem Anschlag (106, 107) eine Schaltkupplung (110) oder eine Rutschkupplung (101) eingefügt ist.

24. Antriebsvorrichtung nach Anspruch 21 oder 22, **dadurch gekennzeichnet, daß** der Anschlag (67) der Blockiereinrichtung (64) dem zweiten Hebel (60) durch einen zweiten Elektromotor (66) nach- und vorwegführbar ist.

25. Antriebsvorrichtung nach einem der Ansprüche 17 bis 24, **dadurch gekennzeichnet, daß** die Blockiereinrichtung (64) einen selbsthemmenden Gewindetrieb mit einer Gewindespindel (67, 106) und einer Spindelmutter (107) umfaßt.

26. Antriebsvorrichtung nach einem der Ansprüche 17 bis 22, **dadurch gekennzeichnet, daß** die Blockiereinrichtung (64) für den zweiten Hebel (60) einen Hydrozylinder (90) mit einem an den zweiten Hebel (60) angelenkten und einen Druckraum (93) begrenzenden Kolben (91), einen Druckflüssigkeitsvorratsbehälter und Ventilmittel (94, 95) aufweist, mit denen der Druckflüssigkeitsaustausch zwischen dem Druckraum (93) und dem Druckflüssigkeitsvorratsbehälter steuerbar ist.

27. Antriebsvorrichtung nach Anspruch 26, **dadurch gekennzeichnet, daß** der in dem Druckraum (93) anstehende Druck durch einen Druckaufnehmer (97) erfaßbar ist.

28. Antriebsvorrichtung nach einem der Ansprüche 1 bis 14, **dadurch gekennzeichnet, daß** der Lenker (52) ein Element einer Kniehebelanordnung (52, 53, 52, 86) ist, die für die Erzeugung einer Zuhaltekraft in Richtung einer Neutrallage verstellbar ist.

29. Antriebsvorrichtung nach Anspruch 28, **dadurch gekennzeichnet, daß** sich der Lenker (52) vom Hebel (32) aus mit geringer Abweichung in Richtung der Bewegung der Formaufspannplatte (18) beim Schließen der Form erstreckt und mit dem zweiten Kniehebelelement (53, 86) einen Winkel kleiner 90 Grad einschließt und daß die Kniehebelanordnung (52, 53; 52, 86) in Richtung einer Neutrallage verstellbar ist, in der der Lenker (52) und das zweite Kniehebelelement (53, 86) maximal gebeugt sind.

30. Antriebsvorrichtung nach Anspruch 29, **dadurch gekennzeichnet, daß** die Kniehebelanordnung (52, 86) durch den Elektromotor (27) verstellbar ist.

31. Antriebsvorrichtung nach Anspruch 30, **dadurch gekennzeichnet, daß** der Elektromotor (27) am zweiten Kniehebelelement (86) schwenkbar gelagert ist und daß das zweite Kniehebelelement (86) während der Stellbewegung der beweglichen Formaufspannplatte (18) durch eine lösbare Blockiervorrichtung (89) gegen eine Verschwenkung blockierbar ist.

32. Antriebsvorrichtung nach Anspruch 31, **dadurch gekennzeichnet, daß** die lösbare Blockiervorrichtung eine vorgespannte Feder (89) und einen Anschlag (85) umfaßt, an den das zweite Kniehebelelement (86) von der Feder (89) audrückbar ist.

33. Antriebsvorrichtung nach Anspruch 29, **dadurch gekennzeichnet, daß** die Kniehebelanordnung (52, 53) durch einen zweiten Elektromotor (58) verstellbar ist.

34. Antriebsvorrichtung nach Anspruch 33, **dadurch gekennzeichnet, daß** das zweite Kniehebelelement (53) mit einer Verzahnung (56) versehen ist und von dem zweiten Elektromotor (58) ein Zahnrad (57) antreibbar ist, das mit der Verzahnung (56) des zweiten Kniehebelelements (53) kämmt.

35. Antriebsvorrichtung nach einem vorhergehenden Anspruch, **dadurch gekennzeichnet, daß** der zweiarmige Hebel (72) an seinem kurzen Hebelarm (76) ein Zahnsegment (75) aufweist, daß an der beweglichen Formaufspannplatte (18) ein Hebelarm eines zweiten zweiarmigen Hebels (80) drehbar gelagert ist, der an seinem anderen Hebelarm ein Zahnsegment (81) aufweist, das mit dem Zahnsegment (75) am ersten zweiarmigen Hebel (72) in Eingriff ist

36. Antriebsvorrichtung nach Anspruch 35, **dadurch gekennzeichnet, daß** außer dem ersten Hebel (72) auch der zweite Hebel (80) über ein Drehgelenk (82), dessen Drehachse (83) die Hebelachse des zweiten Hebels (80) ist, mit dem verschwenkbaren Lenker (73) gekoppelt ist, wobei der Abstand der Drehachsen (38, 83) der beiden Drehgelenke (36, 82) voneinander gleich der Summe der Radien der beiden Zahnsegmente (75, 81) ist.

## Claims

1. A drive device for the mould mounting plate (18), which is to be moved linearly in a positioning movement and held closed with a high closing force, of an injection moulding machine with a machine frame (10),
having an electromotive drive unit (25) comprising an electric motor (27) and an output element (30) which can be moved linearly in the direction of the axis of the electric motor (27),
and having a lever mechanism (26) which is arranged in the force chain between the output element (30) of the electromotive drive unit (25) and the mould mounting plate (18) and by means of which the mould mounting plate (18) can be moved by the electromotive drive unit (25) during the positioning movement and the high clamping force can be supported through leverage,
wherein the lever gear mechanism (26) comprises a two-armed lever (32, 72) with a short lever arm (40, 76) and a long lever arm (39, 74), the long lever arm (39, 74) being closer in the force chain to the output element (30) of the electromotive drive (25) than the short lever arm (40, 76) and the short lever arm running essentially perpendicularly to the direction of movement of the mould mounting plate (18), and a guide arm (37, 52, 73, 117) which is pivotably mounted at its one side to a machine part (11, 18) and is coupled via a rotary joint (36, 115) to the lever (32, 72),
**characterized by the fact that**
the lever (32, 72) and the guide arm (37, 52, 73, 117) are disposed in such a manner that the guide arm (37, 52, 73, 117) is subjected to traction when the high clamping force is applied.

2. A drive device according to claim 1, **characterized by** the fact that the lever (32, 72) is a straight lever and, consequently, the long lever arm (39, 74) also runs essentially perpendicularly to the direction of movement of the mould mounting plate (18).

3. A drive device according to claim 1, **characterized by** the fact that the lever (32) is an angled lever and the long lever arm (39) assumes an angle of less than 90 degrees in particular relative to the direction of movement of the mould mounting plate (18) when the mould is being closed.

4. A drive device according to any of the preceding claims, **characterized by** the fact that, when the machine axis is horizontal, the electric motor (27) is arranged below a fixed mould mounting plate (13) or the injection unit (15) of the injection moulding machine.

5. A drive device according to any of the preceding claims, **characterized by** the fact that the lever mechanism (26) is coupled to the movable mould mounting plate (18) via a rotary joint (33) with a fixed axis of rotation (34) relative to said mould mounting plate (18).

6. A drive device according to any of the preceding claims, **characterized by** the fact that the lever (32) is coupled to the movable mould mounting plate (18) via a guide arm (117) which is connected in an articulated manner to the short lever arm (40) via a rotary joint (115).

7. A drive device according to any of claims 1 to 5, **characterized by** the fact that the lever (32) is coupled to the movable mould mounting plate (18) via a rotary joint (33) and has a lever axis (38) which is displaceable during the positioning movement of the mould mounting plate (18).

8. A drive device according to any of claims 1 to 6, **characterized by** the fact that the lever (32) has a lever axis (38) that is fixed relative to the frame.

9. A drive device according to any of claims 1 to 7, **characterized by** the fact that the lever (32, 72) is coupled to a pivotable guide arm (37, 52, 73) via a rotary joint (36) whose axis of rotation (38) is the lever axis.

10. A drive device according to claim 9, **characterized by** the fact that the guide arm (37, 52, 73) is essentially aligned in the direction of the resultant of the forces acting on the two lever arms (39, 40).

11. A drive device according to claim 9 or 10, **characterized by** the fact that the guide arm (37, 52, 73) is located on the same side of the lever (32, 72) as a fixed mould mounting plate (13).

12. A drive device according to any of claims 9 to 11, **characterized by** the fact that the guide arm (37, 73) is pivotable about an axis of rotation (41) fixed relative to the frame and located at a distance from the rotary joint (36) between said guide arm (37, 73) and the lever (32, 72).

13. A drive device according to any of the preceding claims, **characterized by** the fact that the output element (30) of the electromotive drive unit (25) is coupled directly to the lever (32, 72) via a rotary joint (35) whose axis of rotation (31) runs parallel to the lever axis (38) and that the electric motor (27) is pivotable around an axis of rotation (28) parallel to the lever axis (38) and fixed relative to the frame.

14. A drive device according to any of claims 1 to 13, **characterized by** the fact that a toggle lever arrangement (45, 46) with a first element (45) and with a second element (46) connected to the first element (45) via a first rotary joint (44), that the first element (45) is connected to the lever (32) via a second rotary joint (35) situated at a distance from the first rotary joint (44) and the second element (46) is connected to the machine frame (10) via a third rotary joint (47) situated at a distance from the first rotary joint (44) and that the toggle lever arrangement (45, 46) can be straightened and flexed by the output element (30) of the electromotive drive unit (25).

15. A drive device according to any of the preceding claims, **characterized by** the fact that the length of at least one lever arm (39, 40) of the lever (32) can be varied.

16. A drive device according to claim 15, **characterized by** the fact that the length of the lever arms (39, 40) can be varied by displacing the lever axis (38).

17. A drive device according to claim 16, **characterized by** the fact that a second lever (60) is present which can be pivoted about a lever axis (38) and is coupled to the first lever (32) via a rotary joint (61), that the distance of this rotary joint (61) from the end of the short lever arm (40) of the first lever (32) is smaller than the distance of the lever axis (38) of the second lever (60) from the end of the short lever arm (40) of the first lever (32), that the second lever (60) and the first lever (32) can be pivoted together about the lever axis (38) of the second lever (60) and that, when the second lever (60) is prevented by means of a blocking device (64) from pivoting back, the first lever (32) alone is pivotable about the axis (62) of the rotary joint (61) between it and the second lever (60).

18. A drive device according to claim 17, **characterized by** the fact that the first lever (32) and the second lever (60) can be connected via a detachable coupling (65) to form a fixed unit and as such can be pivoted by the electromotive drive unit (25) acting on the first lever (32) while bypassing the second lever (60).

19. A drive unit according to claim 18, **characterized by** the fact that the detachable coupling comprises a pretensioned spring (65) which holds, up to a limit force, the second lever (60) against a stop of the first lever (32).

20. A drive device according to claim 18 or 19, **characterized by** the fact that the two levers (32, 60) can be coupled to each other near the end of the long lever arm (39) of the first lever (32) by means of the detachable coupling (65).

21. A drive device according to any of claims 17 to 20, **characterized by** the fact that the blocking device (64) for the second lever (60) has a stop (67, 106, 107) which can be made to follow or precede the second lever (60).

22. A drive device according to any of claims 17 to 21, **characterized by** the fact that the blocking device (64) for the second lever (60) executes the same pivoting movements as and with the electric motor (27).

23. A drive device according to any of claims 17 to 22, **characterized by** the fact that the stop (106, 107) of the blocking device (64) for the second lever (60) can be made to follow or precede it by means of the electric motor (27), a switching clutch (110) or a sliding clutch (101) being inserted between a corresponding output of the electric motor (27) and the stop (106, 107).

24. A drive device according to claim 21 or 22, **characterized by** the fact that that the stop (67) of the blocking device (64) can be made to follow or precede the second lever (60) by means of a second electric motor (66).

25. A drive device according to any of claims 17 to 24, **characterized by** the fact that the blocking device (64) comprises a self-locking screw drive with a threaded shaft (67, 106) and a threaded nut (107).

26. A drive device according to any of claims 17 to 22, **characterized by** the fact that the blocking device (64) for the second lever (60) has a hydraulic cylinder (90) with a piston (91) joined in an articulated manner to the second lever (60) and delimited a pressure chamber (93), a pressure fluid reservoir and valve means (94, 95) with which the pressure fluid exchange between the pressure chamber (93) and the pressure fluid reservoir can be controlled.

27. A drive device according to claim 26, **characterized by** the fact that the pressure prevailing in the pressure chamber (93) can be sensed by a pressure sensor (97).

28. A drive device according to any of claims 1 to 14, **characterized by** the fact that the guide arm (52) is an element of a toggle lever arrangement (52, 53; 52, 86) which can be adjusted in the direction of a neutral position for the purpose of generating a closing force.

29. A drive device according to claim 28, **characterized by** the fact that the guide arm (52) extends from the lever (32) with a slight deviation in the direction of the movement of the mould mounting plate (18) when the mould is being closed and, together with the second toggle lever element (53, 86) forms an angle of less than 90 degrees, and that the toggle lever arrangement 52, 53; 52, 86) can be adjusted in the direction of a neutral position in which the guide arm (52) and the second toggle lever element (53, 86) are flexed to a maximal extent.

30. A drive device according to claim 29, **characterized by** the fact that the toggle lever arrangement (52, 86) can be adjusted by means of the electric motor (27).

31. A drive device according to claim 30, **characterized by** the fact that the electric motor (27) is pivotably mounted on the second toggle lever element (86) and that the second toggle lever element (86) can be blocked against pivoting during the positioning movement of the movable mould mounting plate (18) by a detachable blocking device (89).

32. A drive device according to claim 31, **characterized by** the fact that the detachable blocking device comprises a pretensioned spring (89) and a stop (85) against which the second toggle lever element (86) can be brought to bear by the spring (89).

33. A drive device according to claim 29, **characterized by** the fact that the toggle lever element (52, 53) can be adjusted by means of a second electric motor (58).

34. A drive device according to claim 33, **characterized by** the fact that the second toggle lever element (53) is provided with gearing (56) and the second electric motor (58) can drive a gear wheel (57) which meshes with the gearing (56) of the second toggle lever element (53).

35. A drive device according to any of the preceding claims, **characterized by** the fact that the two-armed lever (72) has on its short lever arm (76) a toothed segment (75), that there is mounted pivotably on the movable mould mounting plate (18) a lever arm of a second two-armed lever (80) whose other lever arm has a toothed segment (81) which meshes with the toothed segment (75) on the first two-armed lever (72).

36. A drive device according to claim 35, **characterized by** the fact that in addition to the first lever (72), the second lever (80) is also coupled to the pivotable guide arm (73) via a rotary joint (82) whose axis of rotation (83) is the lever axis of the second lever (80), the axes of rotation (38, 83) of the two rotary joints (36, 82) being spaced at a distance from each other which is equal to the sum of the radii of the two toothed segments (75, 81).

## Revendications

1. Dispositif d'entraînement pour le plateau (18) porte-outillage, qui doit être déplacé en ligne droite dans un mouvement de positionnement et doit être maintenu avec une force de fermeture élevée, d'une machine à mouler par injection dotée d'un bâti (10) de machine,
doté d'une unité (25) d'entraînement électromotrice, qui présente un moteur (27) électrique et un élément (30) de sortie pouvant coulisser en ligne droite dans la direction de l'axe du moteur (27) électrique,
et doté d'un mécanisme (26) de leviers, qui est placé dans la chaîne de forces entre l'élément (30) de sortie de l'unité (25) d'entraînement électromotrice et le plateau (18) porte-outillage et qui permet à l'unité (25) d'entraînement électromotrice de déplacer le plateau (18) porte-outillage pour le positionner et de renforcer la force de fermeture élevée en la démultipliant,
cependant que le mécanisme (26) de leviers comporte un levier (32, 72) à deux bras, qui présente un bras (40, 76) de levier court et un bras (39, 74) de levier long, le bras (39, 74) de levier long étant disposé plus près de l'élément (30) de sortie de l'unité (25) d'entraînement électromotrice que le bras (40, 76) de levier court dans la chaîne de forces et le bras (40, 76) de levier court étant essentiellement perpendiculaire à la direction du mouvement du plateau (18) porte-outillage, et un bras (37, 52, 73, 117) articulé, qui d'une part est guidé de façon à pouvoir pivoter au niveau d'un élément (11, 18) de la machine et qui est accouplé au levier (32, 72) par une articulation (36, 115) tournante,
**caractérisé en ce que**
le levier (32, 72) et le bras (37, 52, 73, 117) articulé sont disposés de façon à ce que le bras (37, 52, 73, 117) articulé soit sollicité en traction au moment d'appliquer la grande force de fermeture.

2. Dispositif d'entraînement selon la revendication n° 1, **caractérisé en ce que** le levier (32, 72) est un levier droit et, en conséquence, que le long bras (39, 74) de levier présente une direction essentiellement perpendiculaire à la direction du mouvement du plateau (18) porte-outillage.

3. Dispositif d'entraînement selon la revendication n° 1, **caractérisé en ce que** le levier (32) est un levier coudé et le long bras (39) de levier présente un angle inférieur à 90 degrés en particulier avec la direction du mouvement du plateau (18) porte-outillage, au moment de la fermeture du moule.

4. Dispositif d'entraînement selon une revendication précédente, **caractérisé en ce que**, lorsque l'axe de la machine est horizontal, le moteur (27) électrique est disposé sous un plateau (13) porte-outillage fixe ou sous l'unité (15) d'injection de la machine à mouler par injection.

5. Dispositif d'entraînement selon une revendication précédente, **caractérisé en ce que** le mécanisme (26) de leviers est accouplé à ce plateau (18) porte-outillage par l'intermédiaire d'une articulation (33) tournante dotée d'un axe (34) de rotation fixe par rapport au plateau (18) porte-outillage.

6. Dispositif d'entraînement selon une revendication précédente, **caractérisé en ce que** le levier (32) est accouplé au plateau (18) porte-outillage mobile par l'intermédiaire d'un bras (117), qui s'articule sur une articulation (115) tournante au niveau du bras (40) de levier court.

7. Dispositif d'entraînement selon une des revendications n° 1 à n° 5, **caractérisé en ce que** le levier (32) est accouplé au plateau (18) porte-outillage mobile par l'intermédiaire d'une articulation (33) tournante et présente un axe (38) de levier, qui peut être déporté pendant le mouvement de positionnement du plateau (18) porte-outillage.

8. Dispositif d'entraînement selon une des revendications n° 1 à n° 6, **caractérisé en ce que** le levier (32) présente un axe (38) de levier fixe par rapport au bâti.

9. Dispositif d'entraînement selon une des revendications n° 1 à n° 7, **caractérisé en ce que** le levier (32, 72) est accouplé avec un bras (37, 52, 73) articulé, dont l'axe (38) de rotation est l'axe de levier, par l'intermédiaire d'une articulation (36) tournante.

10. Dispositif d'entraînement selon la revendication n° 9, **caractérisé en ce que** le bras (37, 52, 73) est essentiellement orienté dans la direction de la résultante des forces, qui s'exercent sur les deux bras (39, 40) de levier.

11. Dispositif d'entraînement selon la revendication n° 9 ou n° 10, **caractérisé en ce que** le bras (37, 52, 73) articulé est disposé du même côté du levier (32, 72) qu'un plateau (13) porte-outillage fixe.

12. Dispositif d'entraînement selon une des revendications n° 9 à n° 11, **caractérisé en ce que** le bras (37, 73) peut tourner autour d'un axe (41) de rotation fixe sur le bâti, à distance de l'articulation (36) tournante entre celui-ci et le levier (32, 72).

13. Dispositif d'entraînement selon une revendication précédente, **caractérisé en ce que** l'élément (30) de sortie de l'unité (25) d'entraînement électromotrice est accouplé directement au levier (32, 72) par une articulation (35) tournante, dont l'axe (31) de rotation est parallèle à l'axe (38) de levier, et que le moteur (27) électrique peut tourner autour d'un axe (28) de rotation, qui est parallèle à l'axe (38) de levier et fixe par rapport au bâti.

14. Dispositif d'entraînement selon une des revendications n° 1 à n° 13, **caractérisé en ce qu'**est prévu un dispositif (45, 46) de genouillère doté d'un premier élément (45) et d'un deuxième élément (46), qui est relié au précédent par une première articulation (44) tournante, qu'une deuxième articulation (35) tournante, distante de la première articulation (44) tournante, relie le premier élément (45) au levier (32) et une troisième articulation (47) tournante, distante de la première articulation (44) tournante, relie le deuxième élément (46) au bâti (10) de la machine et que le dispositif (45, 46) de genouillère peut être étiré et plié par l'élément (30) de sortie de l'unité (25) d'entraînement électromotrice.

15. Dispositif d'entraînement selon une revendication précédente, **caractérisé en ce que** la longueur d'au moins un bras (39, 40) de levier du levier (32) peut être modifiée.

16. Dispositif d'entraînement selon la revendication n° 15, **caractérisé en ce que** la longueur des bras (39, 40) de levier peut être modifiée par un déplacement de l'axe (38) de levier.

17. Dispositif d'entraînement selon la revendication n° 16, **caractérisé en ce qu'**est prévu un deuxième levier (60), qui est accouplé au premier levier (32) par une articulation (61) tournante de façon à pouvoir tourner autour d'un axe (38) de levier, que la distance entre cette articulation (61) tournante et l'extrémité du bras (40) de levier court du premier levier (32) est inférieure à la distance entre l'axe (38) de levier du deuxième levier (60) et l'extrémité du bras (40) de levier court du premier levier (32), que le deuxième levier (60) et le premier levier (32) peuvent tourner conjointement autour de l'axe (38) de levier du deuxième levier (60) et que le premier (32) levier peut tourner seul autour de l'axe (62) de l'articulation (61) tournante le reliant au deuxième levier (60), lorsque le deuxième levier (60) est étayé contre une rotation dans le sens du retour par un dispositif (64) de blocage.

18. Dispositif d'entraînement selon la revendication n° 17, **caractérisé en ce que** le premier levier (32) et le deuxième levier (60) peuvent être raccordés par un accouplement (65) amovible pour constituer une unité fixe et, en tant que telle, peuvent être conduits à tourner à l'aide de l'unité (25) d'entraînement électromotrice, qui prend au niveau du premier levier (32) en contournant le deuxième levier (60).

19. Dispositif d'entraînement selon la revendication n° 18, **caractérisé en ce que** l'accouplement amovible présente un ressort (65) précontraint, qui maintient le deuxième levier (60) contre une butée au niveau du premier levier (32) jusqu'à une force limite.

20. Dispositif d'entraînement selon la revendication n° 18 ou n° 19, **caractérisé en ce que** les deux leviers (32, 60) peuvent être accouplés l'un à l'autre par l'accouplement (65) amovible, près de l'extrémité du bras (39) de levier long du premier levier (32).

21. Dispositif d'entraînement selon une des revendications n° 17 à n° 20, **caractérisé en ce que** le dispositif (64) de blocage du deuxième levier (60) présente une butée (67, 106, 107), qui peut être amenée à poursuivre le ou précéder le retour du deuxième levier (60).

22. Dispositif d'entraînement selon une des revendications n° 17 à n° 21, **caractérisé en ce que** le dispositif (64) de blocage du deuxième levier (60) effectue les mêmes mouvements de rotation que le moteur (27) électrique, avec lui.

23. Dispositif d'entraînement selon une des revendications n° 17 à n° 22, **caractérisé en ce que** la butée (106, 107) du dispositif (64) de blocage du deuxième levier (60) peut être amenée à le poursuivre ou précéder son retour à l'aide du moteur (27) électrique, cependant qu'un accouplement (110) à commutation ou un accouplement (101) à friction est inséré entre une prise de force correspondante du moteur (27) électrique et la butée (106, 107).

24. Dispositif d'entraînement selon la revendication n° 21 ou n° 22, **caractérisé en ce qu'**un deuxième moteur (66) électrique peut amener la butée (67) du dispositif (64) de blocage à poursuivre le ou précéder le retour du deuxième levier (60).

25. Dispositif d'entraînement selon une des revendications n° 17 à n° 24, **caractérisé en ce que** le dispositif (64) de blocage présente un entraînement à filetage autobloquant doté d'une broche (67, 106) filetée et d'un écrou (107) de broche.

26. Dispositif d'entraînement selon une des revendications n° 17 à n° 22, **caractérisé en ce que** le dispositif (64) de blocage du deuxième levier (60) présente un vérin (90) hydraulique doté d'un piston (91), qui est articulé au niveau du deuxième levier (60) et qui délimite une chambre (93) de pression, un réservoir de fluide de pression et des moyens (94, 95) distributeurs, qui permettent de commander l'échange de fluide de pression entre la chambre (93) de pression et le réservoir de fluide de pression.

27. Dispositif d'entraînement selon la revendication n° 26, **caractérisé en ce que** la pression régnant dans la chambre (93) de pression peut être saisie à l'aide d'un capteur (97) de pression.

28. Dispositif d'entraînement selon une des revendications n° 1 à n° 14, **caractérisé en ce que** le bras (52) constitue un élément d'un dispositif (52, 53 ; 52, 86) de genouillère, qui peut être déplacé dans le sens d'une position neutre pour produire une force de fermeture.

29. Dispositif d'entraînement selon la revendication n° 28, **caractérisé en ce que**, lors de la fermeture du moule, le bras (52) s'étend à partir du levier (32) avec peu de déviation dans la direction du mouvement du plateau (18) porte-outillage et présente un angle de moins de 90° avec le deuxième élément (53, 86) de genouillère et que le dispositif (52, 53 ; 52, 86) de genouillère peut être déplacé dans le sens d'une position neutre, où le bras (52) et le deuxième élément (53, 86) de genouillère subissent un pliage maximal.

30. Dispositif d'entraînement selon la revendication n° 29, **caractérisé en ce que** le moteur (27) électrique peut faire bouger le dispositif (52, 86) de genouillère.

31. Dispositif d'entraînement selon la revendication n° 30, **caractérisé en ce que** le moteur (27) électrique est guidé de façon à pouvoir effectuer une rotation au niveau du deuxième élément (86) de genouillère et que, pendant le mouvement de positionnement du plateau (18) porte-outillage mobile, le deuxième élément (86) de genouillère peut être bloqué contre toute rotation à l'aide d'un dispositif (89) de blocage amovible.

32. Dispositif d'entraînement selon la revendication n° 31, **caractérisé en ce que** le dispositif de blocage amovible présente un ressort (89) précontraint et une butée (85), contre laquelle le deuxième élément (86) de genouillère peut être appliqué par le ressort (89).

33. Dispositif d'entraînement selon la revendication n° 29, **caractérisé en ce que** le dispositif (52, 53) de genouillère peut être conduit à bouger à l'aide d'un deuxième moteur (58) électrique.

34. Dispositif d'entraînement selon la revendication n° 33, **caractérisé en ce que** le deuxième élément (53) de genouillère est doté d'un engrenage (56) et le deuxième moteur (58) électrique peut entraîner un pignon (57), qui prend dans l'engrenage (56) du deuxième élément (53) de genouillère.

35. Dispositif d'entraînement selon une revendication précédente, **caractérisé en ce que** le levier (72) à deux bras présente un segment (75) à engrenage au niveau de son bras (76) de levier court, qu'au niveau du plateau (18) porte-outillage mobile est guidé, de façon à pouvoir tourner, un bras de levier d'un deuxième levier (80) à deux bras, qui au niveau de son autre bras de levier présente un segment (81) à engrenage, qui prend dans le segment (75) à engrenage du premier levier (72) à deux bras.

36. Dispositif d'entraînement selon la revendication n° 35, **caractérisé en ce que**, en plus du levier (72), le deuxième levier (80) lui aussi est accouplé au levier (73) articulé par une articulation (82) tournante, dont l'axe (83) de rotation est l'axe de levier du deuxième levier (80), cependant que la distance séparant les axes (38, 83) de rotation des deux articulations (36, 82) tournantes est égale à la somme des rayons des deux segments (75, 81) à engrenage.
